# EUROPEAN PATENT APPLICATION

(11) **EP 4 296 890 A1**
(43) Date of publication of application: **27.12.2023**
(21) Application number: 22758718.5
(22) Date of filing: 19.01.2022
(51) Int. Cl.: G06K 9/62

(54) **ACQUISITION CYCLE DETERMINING METHOD, APPARATUS AND SYSTEM, DEVICE, AND STORAGE MEDIUM**

(30) Priority: 25.02.2021 CN 202110209732; 26.04.2021 CN 202110456117
(71) Applicant: Huawei Technologies Co., Ltd., Shenzhen, Guangdong 518129 (CN)
(72) Inventor: YE, Haonan, Shenzhen, Guangdong 518129 (CN); XU, Weiwang, Shenzhen, Guangdong 518129 (CN); XUE, Li, Shenzhen, Guangdong 518129 (CN); CHENG, Jian, Shenzhen, Guangdong 518129 (CN)
(74) Representative: Huawei European IPR
(86) International application number: PCT/CN2022/072756
(87) International publication number: WO 2022/179352

(57) **Abstract**

A method, an apparatus, and a system for determining a collection period, a device, and a storage medium are disclosed, and pertain to the field of machine learning technologies. In this method, a machine learning model is obtained by using a training dataset collected based on candidate collection periods of X features, and a candidate collection period of each of the X features is determined as a target collection period of each feature based on the obtained machine learning model and a first condition. Because the target collection period of each feature is greater than a minimum collection period of each feature, subsequently, if data is collected based on the target collection period of each feature, an amount of the collected data is reduced, to reduce collection load of a device and memory occupied by sampled data, thereby reducing time redundancy.

## Description

This application claims priority to Chinese Patent Application No. 202110209732.1, filed on February 25, 2021 and entitled "DATA COLLECTION METHOD AND SYSTEM", which is incorporated herein by reference in its entirety.

This application claims priority to Chinese Patent Application No. 202110456117.0, filed on April 26, 2021 and entitled "METHOD, APPARATUS, AND SYSTEM FOR DETERMINING COLLECTION PERIOD, DEVICE, AND STORAGE MEDIUM", which is incorporated herein by reference in its entirety.

### TECHNICAL FIELD

This application relates to the field of machine learning technologies, and in particular, to a method, an apparatus, and a system for determining a collection period, a device, and a storage medium.

### BACKGROUND

To build a machine learning model with optimal performance, a device collects features (also referred to as variables) with a large quantity of data flows during data collection. However, feature dimensions required for ensuring optimal model performance are far less than feature dimensions of actually collected data. For example, a device may be capable of collecting 1000 features, but only 100 of them may need to be collected to build a service model (that is, a machine learning model). The unnecessary collected features are redundant features in feature space. To avoid feature space redundancy, continuous tests are required. Finally, an optimal machine learning model is built through refined feature screening.

However, in a current data collection process, in addition to feature space redundancy, feature time redundancy may also occur. It can be learned from a current data collection process that, due to feature time redundancy, a device collects a large quantity of redundant data, and the collection of the redundant data causes waste of collected resources and large consumption of memory. Therefore, a method for determining a collection period is urgently required, so that an impact of feature time redundancy on the device can be reduced when the device subsequently performs feature collection based on the determined collection period.

### SUMMARY

Embodiments of this application provide a method, an apparatus, and a system for determining a collection period, a device, and a storage medium, to reduce collection load of a device and memory occupied by sampled data, thereby reducing time redundancy. The technical solutions are as follows:
According to a first aspect, a method for determining a collection period is provided. The method includes the following steps:
A first training dataset D1 is obtained. A first machine learning model is obtained based on the first training dataset D1. If the first machine learning model satisfies a first condition, the candidate collection period p1ᵢ of the i^{th} feature is determined as a target collection period of the i^{th} feature. The target collection period of the i^{th} feature is greater than a minimum collection period of the i^{th} feature.

The first training dataset D1 includes sampled data of X features, that is, D1 = {d1₁, ..., d1ᵢ, ..., d1ₓ}, where d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X.

In this method, a machine learning model is obtained by using a training dataset collected based on candidate collection periods of X features, and a candidate collection period of each of the X features is determined as a target collection period of each feature based on the obtained machine learning model and a first condition. Because the target collection period of each feature is greater than a minimum collection period of each feature, subsequently, if data is collected based on the target collection period of each feature, an amount of the collected data is reduced, to reduce collection load of a device and memory occupied by sampled data, thereby reducing time redundancy.

In a possible implementation, the method further includes the following steps:
A second training dataset D2 is obtained. A second machine learning model is obtained based on the second training dataset D2. If the second machine learning model satisfies the first condition and the second training dataset D2 satisfies a second condition, the candidate collection period p2; of the i^{th} feature is determined as a target collection period of the i^{th} feature.

The second training dataset D2 is for training a machine learning model, and the second training dataset D2 includes sampled data of the X features, that is, D2 = {d2₁, ..., d2;, ..., d2ₓ}, where d2ᵢ represents sampled data of the i^{th} feature, d2ᵢ is sampled data obtained by sampling the i^{th} feature based on a candidate collection period p2ᵢ, and p2; is a candidate collection period of the i^{th} feature.

In a possible implementation, that the second training dataset D2 satisfies the second condition includes:
A data amount of the second training dataset D2 in a target time period is less than a data amount of the first training dataset D1 in the target time period.

In a possible implementation, duration of the target time period is greater than or equal to a maximum candidate collection period in a candidate collection period set P2, and the candidate collection period set P2 includes candidate collection periods of the X features, that is, P2 = {p2i, ..., p2ᵢ, ..., p2ₓ}.

In a possible implementation, before the first training dataset D1 is obtained, the method further includes the following step:
The X features are determined from Z features. Importance degrees of the X features all satisfy a third condition, an importance degree of each feature indicates a degree of impact of each feature on a machine learning model obtained through training, Z is an integer greater than 1, and X is an integer greater than 0 and less than or equal to Z.

In a possible implementation, before the first training dataset D1 is obtained, the method further includes the following steps:
First importance degrees of T features are obtained. If first importance degrees of Z features in the T features all satisfy a third condition and none of first importance degrees of Y features in the T features satisfies the third condition, second importance degrees of the Z features and second importance degrees of K features in the Y features are obtained. The X features are determined from the Z features and the K features.

Second importance degrees of the X features all satisfy the third condition. A first importance degree of each feature is an importance degree of each feature obtained based on sampled data of the T features. The importance degree of each feature indicates a degree of impact of each feature on a machine learning model obtained through training. A second importance degree of each feature is an importance degree of each feature obtained based on sampled data of the Z features and the K features. Z and Y are integers less than T, K is an integer greater than 0 and less than Y, and T is an integer greater than 2.

In a possible implementation, the third condition includes that an importance degree of a feature is greater than or equal to a threshold of a degree of impact.

In a possible implementation, the first condition includes that model precision of a machine learning model is greater than or equal to a model precision threshold.

In a possible implementation, the method is performed by an embedded device.

According to a second aspect, a system for determining a collection period is provided. The system includes a data collection unit and an assessment unit.

The data collection unit is configured to obtain a first training dataset D1. The first training dataset D1 is for training a machine learning model, and the first training dataset D1 includes sampled data of X features, that is, D1 = {d1ₗ, ..., d1ᵢ, ..., d1ₓ}, where d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X.

The assessment unit is configured to: obtain a first machine learning model based on the first training dataset D1; and determine, if the first machine learning model satisfies a first condition, the candidate collection period p1; of the i^{th} feature as a target collection period of the i^{th} feature, where the target collection period of the i^{th} feature is greater than a minimum collection period of the i^{th} feature.

In a possible implementation, the data collection unit is further configured to obtain a second training dataset D2. The second training dataset D2 is for training a machine learning model, and the second training dataset D2 includes sampled data of the X features, that is, D2 = {d2₁, ..., d2ᵢ, ..., d2ₓ}, where d2ᵢ represents sampled data of the i^{th} feature, d2ᵢ is sampled data obtained by sampling the i^{th} feature based on a candidate collection period p2ᵢ, and p2ᵢ is a candidate collection period of the i^{th} feature.

The assessment unit is further configured to: obtain a second machine learning model based on the second training dataset D2; and determine, if the second machine learning model satisfies the first condition and the second training dataset D2 satisfies a second condition, the candidate collection period p2; of the i^{th} feature as the target collection period of the i^{th} feature.

In a possible implementation, that the second training dataset D2 satisfies the second condition includes:
A data amount of the second training dataset D2 in a target time period is less than a data amount of the first training dataset D1 in the target time period.

In a possible implementation, duration of the target time period is greater than or equal to a maximum candidate collection period in a candidate collection period set P2, and the candidate collection period set P2 includes candidate collection periods of the X features, that is, P2 = {p2i, ..., p2ᵢ, ..., p2ₓ}.

In a possible implementation, the assessment unit is further configured to:
determine the X features from Z features, where importance degrees of the X features all satisfy a third condition, an importance degree of each feature indicates a degree of impact of each feature on a machine learning model obtained through training, Z is an integer greater than 1, and X is an integer greater than 0 and less than or equal to Z.

In a possible implementation, the assessment unit is further configured to:
obtain first importance degrees of T features, where a first importance degree of each feature is an importance degree of each feature obtained based on sampled data of the T features, the importance degree of each feature indicates a degree of impact of each feature on a machine learning model obtained through training, and T is an integer greater than 2;
obtain, if first importance degrees of Z features in the T features all satisfy a third condition and none of first importance degrees of Y features in the T features satisfies the third condition, second importance degrees of the Z features and second importance degrees of K features in the Y features, where a second importance degree of each feature is an importance degree of each feature obtained based on sampled data of the Z features and the K features, Z and Y are both integers less than T, and K is an integer greater than 0 and less than Y; and
determine the X features from the Z features and the K features, where second importance degrees of the X features all satisfy the third condition.

In a possible implementation, the third condition includes that an importance degree of a feature is greater than or equal to a threshold of a degree of impact.

In a possible implementation, the first condition includes that model precision of a machine learning model is greater than or equal to a model precision threshold.

According to a third aspect, an apparatus for determining a collection period is provided, configured to perform the foregoing method for determining a collection period. Specifically, the apparatus for determining a collection period includes functional modules configured to perform the method for determining a collection period provided in the first aspect or any one of the optional implementations of the first aspect.

According to a fourth aspect, an electronic device is provided. The electronic device includes a processor. The processor is configured to execute program code, so that the electronic device performs operations performed in the foregoing method for determining a collection period.

According to a fifth aspect, a computer-readable storage medium is provided. The storage medium stores at least one piece of program code. When the program code is executed, operations performed in the foregoing method for determining a collection period are implemented.

According to a sixth aspect, a computer program product or a computer program is provided. The computer program product or the computer program includes program code. When the program code is executed, the method provided in the first aspect or the optional implementations of the first aspect is implemented.

According to a seventh aspect, a chip is provided. The chip includes a programmable logic circuit and/or program instructions. When the chip runs, the method provided in the first aspect or any one of the optional implementations of the first aspect is implemented.

### BRIEF DESCRIPTION OF DRAWINGS

FIG. 1 is a schematic diagram of a data collection system according to an embodiment of this application;
FIG. 2 is a schematic diagram of a data center with a three-layer network architecture according to an embodiment of this application;
FIG. 3 is a schematic diagram of a data center with a two-layer network architecture according to an embodiment of this application;
FIG. 4 is a schematic diagram of a data center with a single-layer network architecture according to an embodiment of this application;
FIG. 5 is a flowchart of a data collection method according to an embodiment of this application;
FIG. 6 is a flowchart of a feature determining method according to an embodiment of this application;
FIG. 7 is a schematic diagram of a feature determining method according to an embodiment of this application;
FIG. 8 is a flowchart of a method for determining a collection period according to an embodiment of this application;
FIG. 9 is a schematic diagram of processing sampled data at different granularities according to an embodiment of this application;
FIG. 10 is a flowchart of another method for determining a collection period according to an embodiment of this application;
FIG. 11 is a flowchart of data processing according to an embodiment of this application;
FIG. 12 is a schematic diagram of iterative update of a collection policy according to an embodiment of this application;
FIG. 13 is a flowchart of an incremental update policy according to an embodiment of this application;
FIG. 14 is a schematic diagram of a structure of an apparatus for determining a collection period according to an embodiment of this application;
FIG. 15 is a schematic diagram of a structure of an electronic device according to an embodiment of this application; and
FIG. 16 is a schematic diagram of a structure of an electronic device according to an embodiment of this application.

### DESCRIPTION OF EMBODIMENTS

To make the objectives, technical solutions, and advantages of this application clearer, the following further describes the implementations of this application in detail with reference to the accompanying drawings.

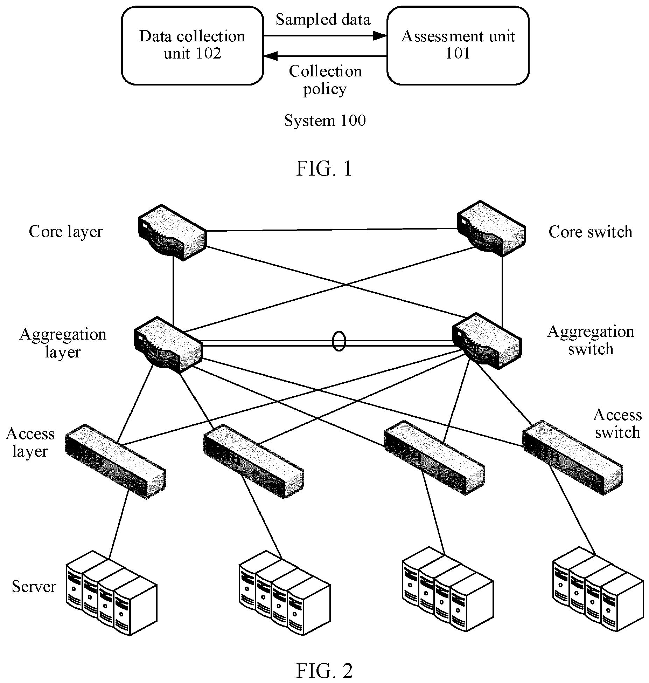

FIG. 1 is a schematic diagram of a data collection system according to an embodiment of this application. Refer to FIG. 1. The system 100 includes an assessment unit 101 and a data collection unit 102. There may be one or more assessment units 101 and data collection units 102 in the system 100.

Each assessment unit 101 is configured to provide a collection policy for at least one data collection unit 102. Each data collection unit 102 is configured to perform, based on the collection policy provided by the assessment unit 101, feature collection on data flows transmitted by the data collection unit 102, and send sampled data of features to the assessment unit 101. The assessment unit 101 obtains a machine learning model based on the sampled data of the features. After obtaining the machine learning model, the assessment unit 101 uploads the machine learning model to a cloud, for a terminal to obtain the machine learning model from the cloud. Alternatively, the assessment unit 101 sends the machine learning model to a terminal. In a possible implementation, the data collection unit 102 sends sampled data of collected features to a third device, and the third device obtains a machine learning model based on the sampled data of the features, and sends the machine learning model to a cloud or a terminal.

In a possible implementation, the assessment unit 101 is a computing device with a computing function, such as a server, a computer device, or a network analyzer. The assessment unit 101 may be disposed on the data collection unit 102 or disposed around the data collection unit 102, for the assessment unit 101 to interact with the data collection unit 102.

The data collection unit 102 is any device with a data transmission function and a data collection function, for example, an embedded device such as a switch or a router. The data collection unit 102 can provide a data transmission service for one or more terminals. For example, if the data collection unit 102 is a forwarding device, the data collection unit 102 forwards, to one or more terminals, data flows sent by a source device. The source device is a transmit end of the data flows. If the data collection unit 102 is a source device, the data collection unit 102 sends data flows generated by the data collection unit 102 to one or more terminals. When transmitting data to a terminal, the data collection unit 102 can further perform, based on the collection policy obtained from the assessment unit 101, feature collection on the data transmitted by the data collection unit 102.

The third device may be a computing device with a computing function, such as a server or a computer device. The third device may be located inside the system 100, or may be located outside the system 100. The terminal in this application may be referred to as a user terminal, a user apparatus, an access apparatus, a subscriber station, a subscriber unit, a mobile station, a user agent, user equipment, a portable terminal, a laptop terminal, a desktop terminal, or the like. For example, the terminal may be a mobile phone, a tablet computer, a set-top box, a smart television, a wearable device, a computer, an artificial intelligence (artificial intelligence, AI) product, or an Internet of Things (internet of things, IoT) terminal. In another example, the terminal may be a smartphone, a moving picture experts group audio layer 3 (moving picture experts group audio layer III, MP3) player, a moving picture experts group audio layer 4 (moving picture experts group audio layer IV, MP4) player, a notebook computer, a desktop computer, a communication server, a router, a switch, a bridge, a smart band, a smart speaker, a smart car, a smart instrument, a smart apparatus, a smart printer, an industrial smart computer, a smart code scanning device, a smart monitoring terminal, or the like.

The foregoing description is made by using an example in which the assessment unit 101 and the data collection unit 102 are two independent devices. In another example, the assessment unit 101 is a first device, and the data collection unit 102 is a second device. In another possible implementation, each of the assessment unit 101 and the data collection unit 102 is used as a unit in a same device. In this case, the system 100 is deployed in the device. For example, the assessment unit 101 and the data collection unit 102 are two units in a first device. In another example, the assessment unit 101 and the data collection unit 102 are two units in a second device.

In a possible implementation, the system 100 may be deployed at a network switch in a data center, and the network switch may be used as at least one of the assessment unit 101 and the data collection unit 102. Optionally, the data center is applied in a scenario such as a campus network or a carrier network. There may be a plurality of network architectures of the data center, for example, data centers shown in FIG. 2 to FIG. 4.

FIG. 2 is a schematic diagram of a data center with a three-layer network architecture according to an embodiment of this application. Refer to FIG. 2. The data center shown in FIG. 2 includes a core layer (core layer), an aggregation layer (aggregation layer), and an access layer (access layer). The core layer includes at least one core switch. The core switch provides a highspeed forwarding service for a data packet that enters or exits the data center, and is connected to the aggregation layer. In some embodiments, the aggregation layer may also be referred to as a spine (spine) layer. The aggregation layer includes a plurality of aggregation switches. The aggregation switches are connected to the access layer and provide other services, such as a secure sockets layer protocol firewall, secure sockets layer (secure sockets layer, SSL) protocol offloading (offload), intrusion detection, or network analysis. In some embodiments, the access layer is also referred to as a leaf (leaf), and the access layer includes a plurality of access switches. The access switches are usually located on a top of a rack, so that the access switches are also referred to as top of rack (top of rack, ToR) switches. The access switches are physically connected to servers and exchange data with the servers.

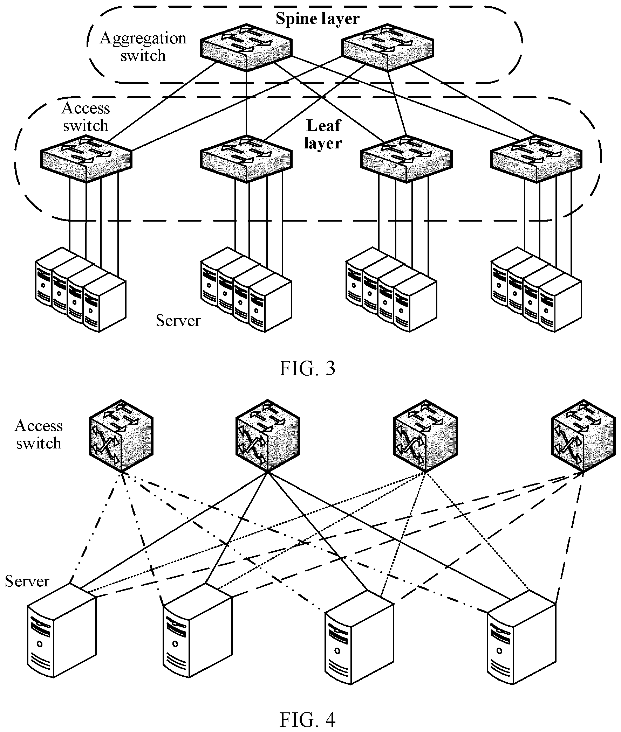

FIG. 3 is a schematic diagram of a data center with a two-layer network architecture according to an embodiment of this application. Refer to FIG. 3. The data center shown in FIG. 3 includes a spine layer and a leaf layer, but does not include a core layer. FIG. 4 is a schematic diagram of a data center with a single-layer network architecture according to an embodiment of this application. Refer to FIG. 4. The data center shown in FIG. 4 includes a leaf layer, but does not include a core layer or a spine layer.

In a possible implementation, it is determined, based on performance of each switch in a data center, whether to deploy the entire system 100 in one switch in the data center. For example, for a core switch with high performance in a data center, the entire system 100 may be deployed in any core switch in a core layer, or deployed in any aggregation switch in an aggregation layer. In this case, the assessment unit 101 and the data collection unit 102 are integrated in the switch in which the entire system 100 is deployed. In another example, for an access switch with low performance in a data center, the data collection unit 102 in the system 100 is deployed in any access switch in an access layer, and the assessment unit 102 is connected to the access switch in a bypass mode.

In another possible implementation, the assessment unit 101 is further configured to update a local collection policy based on sampled data of a feature. To further describe the process, the following method embodiments are used for description by using an example in which the assessment unit 101 is a first device and the data collection unit 102 is a second device.

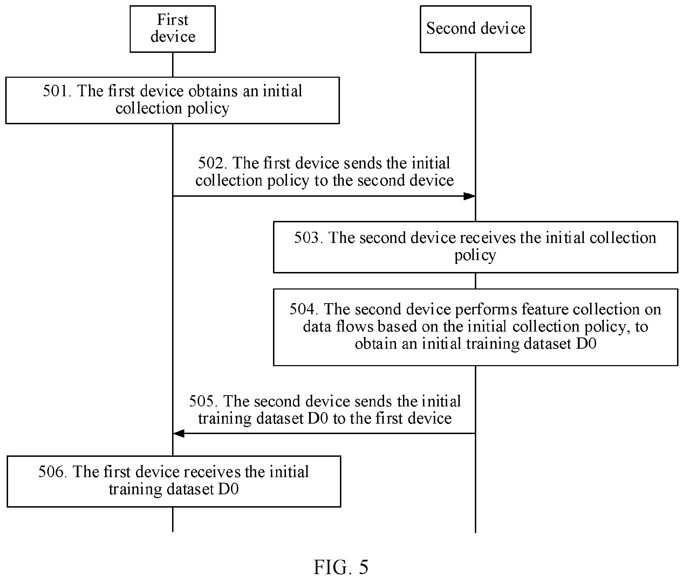

In an initialization phase, the second device obtains an initial collection policy from the first device, so that the second device performs feature collection based on the initial collection policy, and sends sampled data of a feature to the first device. To further describe the process, refer to a flowchart of a data collection method according to an embodiment of this application shown in FIG. 5.

501. A first device obtains an initial collection policy.

The initial collection policy indicates a full feature for training a machine model and an initial collection period of each feature in the full feature. The full feature includes various features for training a machine learning model, or may be understood as various features that affect an output result of training a machine learning model. For example, the full feature includes traffic and a port utilization rate of each port of a second device, a quantity of packets that reach the second device in a unit time, an average packet length, an average packet interval, and the like. The average packet interval is average interval duration between packets that reach the second device in a unit time. The second device is a device for data collection. Packets transmitted through ports of the second device form data flows to be output to a server or a terminal. A packet in the data flows includes an internet protocol (internet protocol, IP) packet or a packet of another protocol type, such as a transmission control protocol (transmission control protocol, TCP) or a user datagram protocol (user datagram protocol, UDP). Herein, a type of a packet transmitted by the second device is not specifically limited in embodiments of this application. A machine learning model obtained through training is any model for implementing deep learning, such as a decision tree, a network traffic transmission model, an image recognition model, a speech recognition model, or an information extraction model.

Optionally, the initial collection policy includes an initial collection period set P0, and the initial collection period set P0 includes an initial collection period of each feature in the full feature, that is, P0 = {p0₁, ..., p0ⱼ, ..., p0_{F}}, where p0ⱼ is an initial collection period of a j^{th} feature in the full feature, j is an integer greater than 0 and less than or equal to F, and F is a quantity of features in the full feature, that is, the full feature includes F features, and F is an integer greater than 1.

Optionally, the initial collection policy further includes identifiers of various features in the full feature. An identifier indicates a feature in the full feature, and the identifier may be a number of the feature. For example, the full feature includes eight features, and identifiers of the eight features are respectively 1 to 8. An identifier corresponds to an initial collection period in the initial collection period set P0. The initial collection period corresponding to the identifier is also an initial collection period of a feature indicated by the identifier, to indicate to collect the feature of data flows based on the initial collection period.

An initial collection period of each feature is a collection period initially set for each feature. A size of an initial collection period of each feature is determined by performance of the second device. If the performance of the second device is high, the initial collection period of each feature is a minimum collection period of each feature. If the performance of the second device is low, the initial collection period of each feature is a maximum collection period of each feature. A minimum collection period of a feature is a minimum collection period allowed by the second device when the feature is collected. A maximum collection period of a feature is a maximum collection period allowed by the second device when the feature is collected. Minimum collection periods of different features may be the same or different. Maximum collection periods of different features may be the same or different.

In a possible implementation, if a quantity of features in the full feature is greater than a first threshold, there are a large quantity of features in the full feature. To reduce collection load of the second device and memory occupied by sampled data, an initial collection period of each feature is a maximum collection period of each feature. The first threshold may be set based on an actual application scenario, and values of the first threshold may be different in different application scenarios. Herein, a value range of the first threshold is not limited in embodiments of this application.

For example, a first threshold is 6, and a full feature includes eight features. In this case, an initial collection period of each feature is set to a maximum collection period of each feature. In an initial collection policy shown in Table 1, a full feature includes eight features, respectively features 1 to 8. In this table, "xxx" represents a correspondence between a feature and a collection period. For example, a feature 1 corresponds to 1 minute, a feature 2 corresponds to 2 minutes, and a feature 8 corresponds to 6 minutes, to indicate that an initial collection period of the feature 1 is 1 minute, an initial collection period of the feature 2 is 2 minutes, and an initial collection period of the feature 8 is 6 minutes.

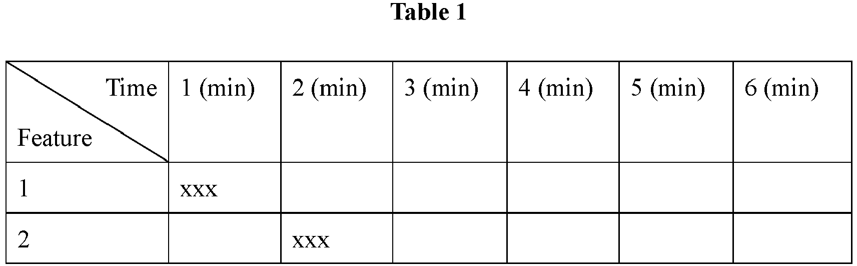

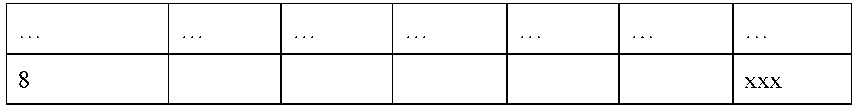

In a possible implementation, if a quantity of features in the full feature is less than or equal to the first threshold (that is, F is less than or equal to the first threshold), there are a small quantity of features in the full feature. To implement refined collection, an initial collection period of each feature is a minimum collection period of each feature.

In a possible implementation, the first device obtains an initial collection policy from a configuration instruction delivered by a user, and stores the initial collection policy. The configuration instruction indicates to configure the initial collection policy.

In a possible implementation, the configuration instruction further includes a model precision threshold of the machine learning model, and the configuration instruction further indicates the first device to output a machine learning model whose model precision reaches the model precision threshold. Evaluation indicators of a machine learning model include accuracy (Accuracy), precision (Precision), recall (Recall), and a comprehensive evaluation indicator (F1-Measure). In some embodiments, model precision of a machine learning model may be measured by accuracy of the machine learning model. The model precision threshold is model precision of a machine learning model required by a user in actual application. A value of the model precision threshold may be set based on an actual application scenario, and thresholds of model precision set in different application scenarios may be the same or may be different. Herein, a value range of the model precision threshold is not limited in embodiments of this application.

502. The first device sends the initial collection policy to a second device.

In a possible implementation, the first device sends a target data collection request to the second device. The target data collection request carries the initial collection policy, and the target data collection request indicates the second device to perform feature collection based on the initial collection policy.

503. The second device receives the initial collection policy.

In a possible implementation, the second device receives the target data collection request from the first device, and obtains the initial collection policy from the target data collection request.

504. The second device performs feature collection on data flows based on the initial collection policy, to obtain an initial training dataset D0.

The data flows are transmitted by the second device. The initial training dataset D0 is for training a machine learning model. The initial training dataset D0 includes sampled data of each feature in a full feature, that is, D0 = {d0₁, ..., d0ⱼ, ..., d0_{F}}, where d0ⱼ is sampled data obtained by sampling a j^{th} feature in the full feature based on the initial collection period p0ⱼ, that is, initial sampled data of the j^{th} feature.

In a possible implementation, for the initial collection period p0ⱼ in the initial collection period set P0 in the initial collection policy, the j^{th} feature in the data flows is sampled based on the initial collection period p0ⱼ in a first time period, to obtain the sampled data d0ⱼ of the j^{th} feature. After obtaining the sampled data of each feature in the full feature, the second device forms the initial training dataset D0 including sampled data of the full feature.

The sampled data d0ⱼ includes each of the j^{th} feature of the data flows collected in the first time period. For example, the j^{th} feature is a port utilization rate of each port of the second device, and the initial collection period p0ⱼ of the j^{th} feature is 1 minute. If duration of the first time period is 10 minutes, the second device calculates the port utilization rate of each port of the second device at 1-minute intervals within 10 minutes, so that all port utilization rates calculated by the second device within the 10 minutes are the sampled data d0ⱼ.

Different duration may be set for the first time period based on an actual application scenario. In different application scenarios, the duration of the first time period may be different. Herein, the duration of the first time period is not limited in embodiments of this application.

505. The second device sends the initial training dataset D0 to the first device.

506. The first device receives the initial training dataset D0.

According to the method provided in this embodiment of this application, if the initial collection period of each feature in the full feature in the initial collection policy is a maximum collection period of each feature, in a specific time period, an amount of data collected by the second device is the smallest, and memory occupied by collected sampled data is also the smallest. Therefore, when full sampling of the full feature is ensured, collection load of the second device is reduced, and memory occupied by sampled data in the first device and the second device is reduced. If the initial collection period of each feature in the full feature in the initial collection policy is a minimum collection period of each feature, sampled data of various features collected by the second device in a specific time period is the most complete.

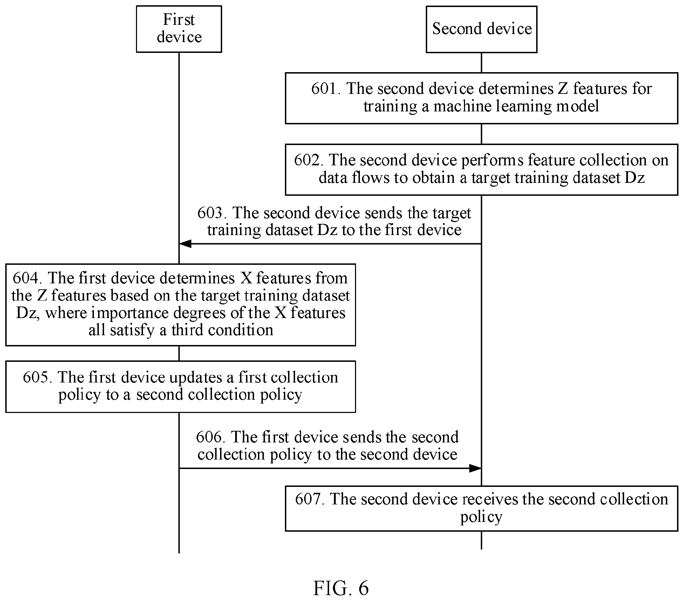

There may be many features in the full feature, and some features in the full feature may have a small impact on a machine learning model obtained through training. In a possible implementation, the first device first determines a feature, in the full feature, that has a small impact on machine learning obtained through training, and deletes the determined feature from the initial collection policy, to update the collection policy in feature dimensions, thereby implementing feature dimension reduction, that is, a process of reducing space redundancy. To further describe the process, refer to a flowchart of a feature determining method according to an embodiment of this application shown in FIG. 6.

601. The second device determines Z features for training a machine learning model, where Z is an integer greater than 1.

The Z features may be the full feature, or may be some features in the full feature. In this case, Z is an integer greater than 1 and less than or equal to F.

In a possible implementation, the second device obtains a first collection policy. The first collection policy includes Z identifiers and a collection period set Pz. The collection period set Pz includes collection periods of the Z features indicated by the z identifiers, that is, Pz = {pz₁, ..., pz_{q}, ..., pz_{z}}, where pz_{q} is a collection period of a q^{th} feature in the Z features, the Z identifiers are in a one-to-one correspondence with the Z collection periods in the collection period set Pz, and q is an integer greater than 0 and less than or equal to Z. The second device determines the Z features indicated by the Z identifiers as the Z features for training the machine learning model.

The first collection policy is a current collection policy (or understood as a latest collection policy) obtained from the first device. If the current collection policy is an initial collection policy, the initial collection policy is the first collection policy, a full feature indicated by the initial collection policy is the Z features, and a collection period of each feature is an initial collection period of each feature. In this case, Z is equal to F. If the current collection policy is not an initial collection policy but an updated collection policy, Z is less than F.

602. The second device performs feature collection on data flows to obtain a target training dataset Dz.

The target training dataset Dz is for training a machine learning model. The target training dataset Dz includes sampled data of the Z features, that is, Dz = {dz₁, ..., dz_{q}, ..., dz_{z}}, where dz_{q} represents sampled data of the q^{th} feature, and dz_{q} is sampled data obtained by sampling the q^{th} feature based on the collection period pz_{q}.

In a possible implementation, the second device performs feature collection on the data flows based on the first collection policy. For example, for pz_{q} in the collection period set Pz in the first collection policy, the q^{th} feature of the data flows is sampled based on the collection period pz_{q} in a second time period, to obtain the sampled data dz_{q} of the q^{th} feature. After obtaining the sampled data of each of the Z features, the second device forms the target training dataset Dz including sampled data of the Z features.

The sampled data dz_{q} of the q^{th} feature includes each of the q^{th} feature of the data flows collected in the second time period. Different duration may be set for the second time period based on an actual application scenario. In different application scenarios, the duration of the second time period may be different. Herein, the duration of the second time period is not limited in embodiments of this application.

603. The second device sends the target training dataset Dz to the first device.

604. The first device determines X features from the Z features based on the target training dataset Dz, where importance degrees of the X features all satisfy a third condition. An importance degree of each feature indicates a degree of impact of each feature on a machine learning model obtained through training.

X is an integer greater than 0 and less than Z. An impact of a feature on a machine learning model obtained through training may be reflected in an impact on one or more performance indicators of the machine learning model. The one or more performance indicators include model precision (namely, precision), accuracy, sensitivity, recall, or the like of the machine learning model.

Importance of a feature measures value of the feature in building a machine learning model. The more often a feature is for building a model, the more important it is and the higher its degree of impact is on the model. Importance of a feature may be represented by an importance degree of the feature. The importance of the feature is positively correlated with the importance degree of the feature. That is, a higher importance degree of the feature indicates higher importance of the feature; and on the contrary, a lower importance degree of the feature indicates lower importance of the feature. Correspondingly, a higher importance degree of the feature indicates a higher degree of impact on the model; and a lower importance degree of the feature indicates a lower degree of impact on the model.

For example, a machine learning model 1 is obtained through training with sampled data of five features: features 1 to 5, and a machine learning model 2 is obtained through training with sampled data of four features: features 2 to 5. When a difference of model precision between the machine learning model 1 and the machine learning model 2 is larger, the feature 1 has a higher degree of impact on the machine learning model, and the feature 1 has a higher importance degree. When the difference of model precision between the machine learning model 1 and the machine learning model 2 is smaller, the feature 1 has a lower degree of impact on the machine learning model, and the feature 1 has a lower importance degree.

To facilitate measurement of an importance degree of a feature, a threshold of a degree of impact may be preset. If an importance degree of a feature is greater than or equal to the threshold of the degree of impact, it is considered that the importance degree of the feature is high; or if an importance degree of a feature is less than the threshold of the degree of impact, it is considered that the importance degree of the feature is low.

In a possible implementation, the third condition includes that an importance degree of a feature is greater than or equal to a threshold of a degree of impact. For example, if an importance degree of a feature is greater than or equal to a threshold of a degree of impact, the feature satisfies the third condition.

In another possible implementation, the third condition includes that in importance degree rankings of the Z features, an importance degree of a feature ranks within a target ranking range. For example, in the importance degree rankings of the Z features, if an importance degree of a feature ranks within the target ranking range, the feature satisfies the third condition. Optionally, if the importance degree ranks in descending order, the target ranking range includes all rankings before a first target ranking. If the importance degree ranks in ascending order, the target ranking range includes all rankings after a second target ranking.

The threshold of the degree of impact, the first target ranking, and the second target ranking may all be set based on a specific application scenario. In different application scenarios, values of the threshold of the degree of impact may be different, values of the first target ranking may be different, and values of the second target ranking may also be different. Herein, value ranges of the threshold of the degree of impact, the first target ranking, and the second target ranking are not limited in embodiments of this application.

In a possible implementation, the process shown in the step 604 includes the following steps 6041 and 6042.

Step 6041. The first device obtains an importance degree of each of the Z features based on the target training dataset Dz.

A manner for the first device to obtain the importance degree of each of the Z features includes any one of the following manners A and B.

Manner A. The first device classifies the sampled data of the Z features based on the target training dataset Dz, and determines the importance degree of each of the Z features based on a classification result.

A decision tree is a machine learning model for classifying data. In a possible implementation, if a to-be-trained machine learning model is a decision tree, the first device obtains the decision tree based on the target training dataset Dz. The decision tree is a classification result of classifying the sampled data of the Z features. In a possible implementation, the process shown in the manner A includes the following steps A1 and A2.

Step A1. The first device builds a decision tree based on the target training dataset Dz.

The decision tree includes a plurality of nodes, and each node is a classification result of sampled data in the target training dataset Dz by the first device based on sampled data of one of the Z features. A node includes a dataset and information entropy (information entropy) of the dataset. The dataset is a subset of the target training dataset Dz. The information entropy of the dataset indicates a mixed degree of feature distribution in the dataset. The first node in the plurality of nodes is a root node of the decision tree. A dataset included in the root node is the target training dataset Dz.

In a possible implementation, the first device performs iterative training based on the target training dataset Dz, to obtain the decision tree. Optionally, for any node in the decision tree, the first device obtains information gains of various features in a dataset of the node. The first device splits the node into at least two subnodes using a feature with a maximum information gain as a classification basis. Each subnode includes a subset of the dataset and information entropy of the subset, and the subset included in each subnode includes no sampled data of the feature with the maximum information gain. For example, a feature with a maximum information gain is a feature 1, and a classification basis is whether sampled data of the feature 1 is greater than a target threshold. In a dataset of the node, if the sampled data of the feature 1 in a time period is greater than a second threshold, the first device stores, in a subset 1 of the dataset, sampled data of various features other than the feature 1 in the dataset in the time period; or if the sampled data of the feature 1 in a time period is less than or equal to a second threshold, the first device stores, in a subset 2 of the dataset, sampled data of various features other than the feature 1 in the dataset in the time period. Finally, the first device splits the node into two subnodes: a subnode 1 and a subnode 2. The subnode 1 includes a subset 1 and information entropy of the subset 1, and the subnode 2 includes a subset 2 and information entropy of the subset 2. The subset 1 is a dataset of the subnode 1, and the subset 2 is a dataset of the subnode 2.

After the first device splits the node into at least two subnodes, for any subnode, if a dataset included in the subnode includes sampled data of a plurality of features, the first device continues to split the subnode in a manner of splitting the node. If sampled data in a dataset included in the subnode belongs to a same feature, the first device does not split the subnode.

Step A2. The first device determines an importance degree of each of the Z features based on the built decision tree.

In a possible implementation, the first device determines the importance degree of each feature based on a location of sampled data of each feature in the decision tree, for example, the processes shown in the following steps A211 and A212.

Step A211. For any feature in the Z features, the first device obtains a node quantity corresponding to the feature.

The node quantity corresponding to the feature is a total node quantity of nodes using the feature as a splitting basis, that is, a quantity of times that the feature is selected as a splitting basis during building of the decision tree. A larger quantity of times that the feature is selected as the splitting basis indicates a greater impact of the feature on the finally built decision tree; or a smaller quantity of times that the feature is selected as the splitting basis indicates a less impact of the feature on the finally built decision tree.

In a possible implementation, the first device counts up a total node quantity of nodes using the feature as a splitting basis in the decision tree, and determines the total node quantity of nodes as a node quantity corresponding to the feature. For example, the plurality of features include features 1 to 5. During building of the decision tree, three nodes are all split into subnodes using the feature 1 as a splitting basis, indicating that the feature 1 is selected three times. Five nodes are all split using the feature 2 as a splitting basis, indicating that the feature 2 is selected five times. One node is split using the feature 3 as a splitting basis, indicating that the feature 1 is selected once. Two nodes are all split into subnodes using the feature 4 as a splitting basis, indicating that the feature 4 is selected twice. One node is split into subnodes using the feature 5 as a splitting basis, indicating that the feature 5 is selected once. In this case, node quantities corresponding to the features 1 to 5 are 3, 5, 1, 2, and 1 respectively.

Step A212. The first device determines the importance degree of each feature based on the node quantity corresponding to each of the Z features.

In a possible implementation, an importance degree of any feature is a ratio of a node quantity corresponding to the feature to a total node quantity corresponding to the Z features. Still based on the example in the step B11, an importance degree of the feature 1 is 3/(3+5+1+2+1).

In another possible implementation, the first device determines an importance degree of each feature based on information entropy of each node in the decision tree, for example, the processes shown in the following steps A221 and A222.

Step A221. For any node in the decision tree, the first device obtains, based on information entropy of the node and information entropy of subnodes of the node, an information entropy gain of a feature corresponding to the node.

The feature corresponding to the node is a feature used as a splitting basis when the node is split into subnodes. The information entropy gain of the feature is a difference between total information entropy of all subnodes of the node and the information entropy of the node. The total information entropy of all subnodes of the node is a sum of information entropy of all the subnodes of the node.

For example, the information entropy of the node is e1, and the node is split into two subnodes whose information entropy is e2 and e3 respectively. In this case, an information entropy gain of a feature corresponding to the node is e1 - (e2 + e3).

Each of the Z features may be selected for splitting a node at least once, so that each feature has at least one information entropy gain. For example, in a process of splitting a root node, if the root node is split into two subnodes using a feature 6 as a splitting basis, datasets in the two subnodes do not include data of the feature 6, and the feature 6 is not used as a splitting basis in subsequent splitting of the two subnodes. Therefore, the feature 6 has one information entropy gain.

In another example, a same node other than a root node in the decision tree is split into a plurality of nodes, and datasets in the plurality of nodes may all include a feature 1. If the plurality of nodes are split into subnodes using the feature 1 as a splitting basis, the feature 1 corresponds to the plurality of nodes. After the splitting of the plurality of nodes is completed, the first device can calculate a plurality of information gains corresponding to the feature 1.

Step A222. The first device determines the importance degree of each feature based on at least one information entropy gain of each of the Z features.

In a possible implementation, the first device counts up a sum of the at least one information entropy gain of each of the Z features, to obtain a total information entropy gain of each feature, and determines the importance degree of each feature based on the total information entropy gain of each of the Z features.

In a possible implementation, that the first device determines the importance degree of each feature based on the total information entropy gain of each of the Z features includes: The first device determines the total information entropy gain of each feature as the importance degree of each feature.

In another possible implementation, that the first device determines the importance degree of each feature based on the total information entropy gain of each of the Z features includes: The first device performs normalization processing on the total information entropy gain of the Z features, and determines a normalization result of the total information entropy gain of each feature as the importance degree of each feature. For example, if the first device increases the total information entropy gain of each feature by 100 times, the total information entropy gain of each feature by 100 times is determined as the importance degree of each feature.

An importance degree of the Z features calculated by using the decision tree can also reflect a correlation among the Z features to some extent. For example, a higher importance degree of any feature in the Z features indicates a higher correlation between the feature and another feature in the Z features; or a lower importance degree of any feature in the Z features indicates a lower correlation between the feature and another feature in the Z features. A feature with a higher correlation with another feature has a greater impact on a machine learning model obtained through training. Therefore, in a possible implementation, when a machine learning model (that is, a machine learning model finally obtained through training) required by a user is not a decision tree, the first device can also obtain the importance degree of each feature in the foregoing manner A.

Manner B. The first device obtains a plurality of test models based on a plurality of subsets of the target training dataset Dz, and determines the importance degree of each of the Z features based on model precision of the plurality of test models.

Each test model is a machine learning model obtained through training based on a subset of the target training dataset Dz. In a possible implementation, the process shown in the manner B includes the following steps B1 to B4.

Step B1. The first device obtains a reference model based on the target training dataset Dz.

The reference model is a machine learning model obtained through training based on the target training dataset Dz. In a possible implementation, the first device performs training based on the target training dataset Dz, to obtain the reference model.

For example, the first device inputs the target training dataset Dz to an initial machine learning model, and performs an iterative training process on the initial machine learning model for a target quantity of times, to obtain the reference machine learning model. The iterative training process each time includes the following steps: The first device calculates a target model parameter based on the target training dataset Dz and a model parameter of a current model, updates the model parameter of the current model to the target model parameter, to obtain a machine learning model generated in the iterative training process this time, and determines the machine learning model generated in the iterative training process this time as a current model for iterative training next time. After the target quantity of times of the iteration process is completed, a machine learning model generated in the last iteration process is the reference model. A current model in the first iteration process is the initial machine learning model.

Step B2. The first device deletes sampled data of at least one feature in the target training dataset Dz to obtain a first subset, and obtains a first test model based on the first subset.

The at least one first feature is some features in the Z features, and the first subset is a subset of the target training dataset Dz. For example, the first device randomly selects 10% of the Z features as the at least one feature, and deletes sampled data of the 10% features from the target training dataset Dz. In this case, the target training dataset Dz with the data deleted is the first subset.

The first test model is one of the plurality of test models, and the first test model is a machine learning model obtained through training based on the first subset. The process in which the first device obtains the first test model based on the first subset is similar to the process in which the first device obtains the reference model based on the target training dataset Dz. Herein, the process in which the first device obtains the first test model based on the first subset is not described again in embodiments of this application.

Step B3. If a difference between model precision of the reference model and model precision of the first test model is greater than a third threshold, the first device determines at least one second subset in the target training dataset Dz based on the at least one feature, and determines an importance degree of the at least one feature based on at least one second test model obtained through training based on the at least one second subset.

Different values may be set for the third threshold based on an actual application scenario. In different application scenarios, the values of the third threshold may be different. For example, in an application scenario 1, the value of the third threshold is 1%; or in an application scenario 2, the value of the third threshold is 2%. Herein, the value of the third threshold is not limited in embodiments of this application.

If the difference between the model precision of the reference model and the model precision of the first test model is greater than the third threshold, model precision of the machine learning model obtained through training is greatly reduced if the target training dataset Dz lacks the sampled data of the at least one feature, and the at least one feature includes a feature that has a great impact on the model precision of the machine learning model obtained through training.

To determine the feature that has a great impact on the model precision of the machine learning model obtained through training, for each of the at least one feature, the first device deletes sampled data of each of the at least one feature in the target training dataset Dz one by one, to obtain the at least one second subset. Each second subset is a subset of the target training dataset Dz. Optionally, each second subset is a dataset obtained after one of the at least one feature in the target training dataset Dz is deleted. For example, for any feature in the at least one feature, the first device deletes sampled data of the feature in the target training dataset Dz, to obtain a second subset. The second subset corresponds to the feature.

After obtaining the at least one second subset, for any subset in the at least one second subset, the first device obtains a second test model based on the subset. This process is similar to the process in which the first device obtains the reference model based on the target training dataset Dz. Herein, the process in which the first device obtains the second test model based on the subset is not described again in embodiments of this application.

After obtaining the at least one second test model, for any model in the at least one second test model, the first device determines an importance degree of a feature corresponding to the model based on model precision of the model and model precision of the reference model. The feature corresponding to the model is a feature that is missing from the second subset for obtaining the model, compared with the target training dataset Dz. The importance degree of the feature is a difference between the model precision of the model and the model precision of the reference model.

For example, the model precision of the reference model is 0.95, and the model precision of the model is 0.5. Compared with the target training dataset Dz, the second subset for obtaining the model lacks sampled data of a feature 1, and an importance degree of the feature 1 is 0.95 - 0.9 = 0.05.

Step B4. If the difference between the model precision of the reference model and the model precision of the first test model is less than or equal to the third threshold, the first device sets the importance degree of the at least one feature to a minimum importance degree.

If the difference between the model precision of the reference model and the model precision of the first test model is less than or equal to the third threshold, the model precision of the machine learning model obtained through training is not greatly reduced if the target training dataset Dz lacks the sampled data of the at least one feature, and the at least one feature has a small impact on the machine learning model obtained through training. Therefore, the first device sets the importance degree of the at least one feature to the minimum importance degree. For example, the minimum importance degree is 0.

After obtaining the importance degree of the at least one feature through the processes shown in the steps B2 to B4, the first device screens at least one feature out of q other features (that is, features other than the at least one feature in the Z features), and performs the processes shown in the steps B2 to B4 on the at least one feature that is newly screened out, to obtain an importance degree of the at least one feature that is newly screened out. The first device repeatedly performs the processes shown in the steps B2 to B4 until the importance degree of each of the Z features is obtained.

Step 6042. The first device determines the X features in the Z features based on the importance degrees of the Z features and the third condition.

When the third condition includes that an importance degree of a feature is greater than or equal to a threshold of a degree of impact, for any feature in the Z features, if an importance degree of the feature is greater than or equal to the threshold of the degree of impact, the feature satisfies the third condition. Therefore, the first device determines the feature as one of the X features.

When the third condition includes that in importance degree rankings of the Z features, an importance degree of a feature ranks within a target ranking range, the first device ranks the importance degrees of the Z features, to obtain an importance degree sequence. All features corresponding to importance degrees within the target ranking range in the importance degree sequence satisfy the third condition. Therefore, the first device determines the features corresponding to the importance degrees within the target ranking range in the importance degree sequence as the X features.

In a possible implementation, the first device creates, based on the importance degrees of the Z features, a boxplot (Boxplot) of the Z features or a normal distribution curve that obeys 3sigma, and removes a feature dimension with a low importance degree from the boxplot or the normal distribution curve that obeys 3sigma, to implement reduction in space.

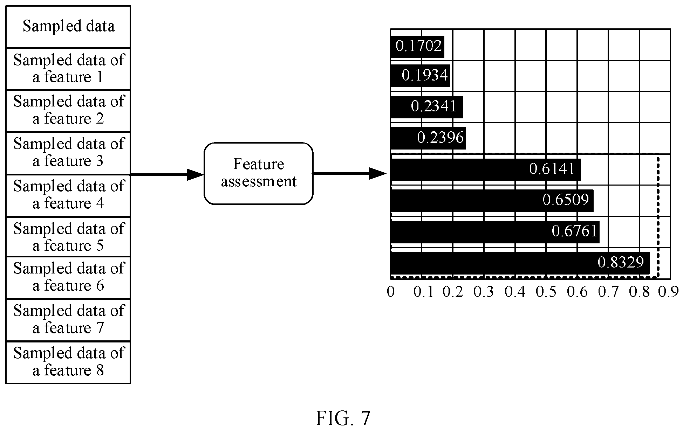

The process shown in the step 604 is the process in which the first device determines the X features from the Z features. To further describe the process shown in the step 604, refer to a schematic diagram of a feature determining method according to an embodiment of this application shown in FIG. 7. In FIG. 7, an example in which a first collection policy includes eight features: features 1 to 8 is used for description. The first device trains a machine learning model based on sampled data of the eight features, and determines importance degrees of the eight features based on the machine learning model obtained through training, to implement feature assessment. The importance degrees of the eight features are 0.1702, 0.1934, 0.2341, 0.2396, 0.6141, 0.6509, 0.6761, and 0.8329 respectively. The first device ranks the importance degrees of the eight features in ascending order, and determines four features corresponding to high importance degrees as the X features determined from the eight features.

In a possible implementation, the method shown in FIG. 6 further includes the following steps 605 to 607.

605. The first device updates the first collection policy to a second collection policy.

The second collection policy is the first collection policy through reduction of space redundancy, or may be understood as a collection policy obtained through feature dimension reduction. The second collection policy indicates collection periods of the X features. Optionally, the second collection policy includes an identifier of each of the X features and a collection period set Px, and the collection period set Px includes a collection period of each of the X features, that is, Px = {px₁, ..., pxᵢ, ..., pxₓ}, where px; is a collection period of an i^{th} feature in the X features, X is an integer greater than 0, and i is an integer greater than 0 and less than or equal to X.

In a possible implementation, if the first collection policy is an initial collection policy, and an initial collection period of each feature in the initial collection policy is a maximum collection period of each feature, the first device deletes identifiers and initial collection periods of features other than the X features in the initial collection policy. If an initial collection period of each of the X features is a maximum collection period of each feature, the first device updates the initial collection period of each of the X features in the initial collection policy to a minimum collection period of each feature, to obtain the second collection policy. In this case, px; is a minimum collection period of the i^{th} feature. If an initial collection period of each of the X features is a minimum collection period of each feature, the first device determines an initial collection policy with identifiers and initial collection periods of features other than the X features deleted as the second collection policy.

In a possible implementation, if the first collection policy is not an initial collection policy but an updated collection policy, the first device deletes identifiers and initial collection periods of features other than the X features in the first collection policy, to obtain the second collection policy.

In this case, the second collection policy is a current collection policy (that is, a latest collection policy), and is also a collection policy obtained through feature dimension adjustment this time. In this case, the first collection policy is a historical policy used during policy update this time.

606. The first device sends the second collection policy to the second device.

607. The second device receives the second collection policy.

According to the method provided in this embodiment of this application, the importance degrees of the Z features for training the machine learning model are assessed, and the X features whose importance degrees satisfy the third condition in the Z features are determined based on the importance degrees of the Z features. Therefore, feature dimensions for training the machine learning model are reduced, thereby reducing space redundancy.

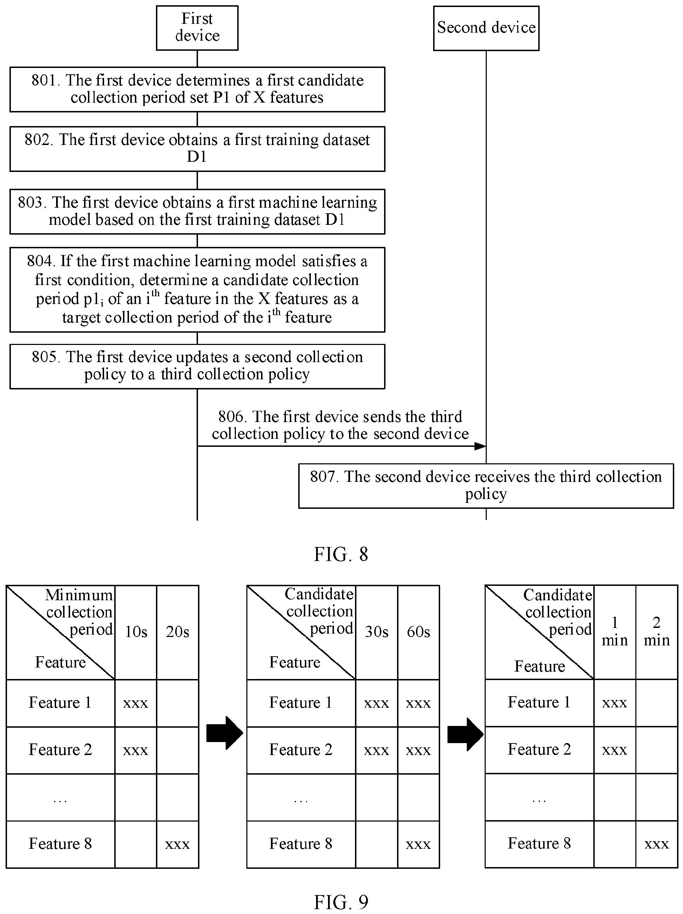

In a possible implementation, after obtaining the second collection policy, the first device can further increase a collection period of the at least one feature to reducing feature time redundancy. To further describe the process, refer to a flowchart of a method for determining a collection period according to an embodiment of this application shown in FIG. 8.

801. The first device determines a first candidate collection period set P1 of X features.

The X features are indicated by a current collection policy. For example, the current collection policy is a second collection policy, and the X features are indicated by the second collection policy. The first candidate collection period set P1 includes a candidate collection period of each of the X features, that is, P1 = {p1₁, ..., p1ᵢ, ..., p1ₓ}, where p1ᵢ is a candidate collection period of an i^{th} feature of the X features. For ease of description, p1ᵢ is used to denote a first candidate collection period of the i^{th} feature. A first candidate collection period of each feature is greater than a minimum collection period of each feature.

In a possible implementation, the first device obtains a first candidate collection period of each of the X features, and forms the first candidate collection period set P1 including the first candidate collection period of each of the X features.

In a possible implementation, that the first device obtains a first candidate collection period of each of the X features includes: For any feature in the X features, the first device obtains a collection period of the feature from the second collection policy, and determines a first candidate collection period of the feature based on the collection period of the feature. The first candidate collection period of the feature is a target multiple of the collection period of the feature. Because a collection period of each feature is greater than or equal to a minimum collection period of each feature, and a first candidate collection period of each feature is a target multiple of each feature, the first candidate collection period of each feature is greater than the minimum candidate collection period of each feature. For example, a target multiple is 2, a collection period of a feature and a minimum collection period of the feature are both 1s, a first candidate collection period of the feature is 2s, and the first candidate collection period of the feature is greater than the minimum collection period of the feature.

In another possible implementation, that the first device obtains a first candidate collection period of each of the X features includes: The first device determines at least one candidate collection period of the X features, and determines a first candidate collection period of each feature from the at least one candidate collection period of each feature, where the first candidate collection period of each feature is any candidate collection period of the feature. For example, the process shown in the step 801 includes the following steps 8011 to 8013.

Step 8011. The first device separately sets at least one candidate collection period for each of the X features, where a candidate collection period of each feature is greater than a minimum collection period of each feature.

In a possible implementation, for any feature in the X features, the first device determines at least one or at least two candidate collection periods of the feature based on a collection period of the feature, where each candidate collection period of the feature is greater than the collection period of the feature. For example, the X features include a feature 1 and a feature 2, and collection periods of the feature 1 and the feature 2 are respectively 1s and 2s. The first device determines 2s as a candidate collection period of the feature 1, and determines 3s and 4s as candidate collection periods of the feature 2.

In a possible implementation, candidate collection periods of some features in the X features are collection periods of the features, and candidate collection periods of the other features in the X features are all greater than collection periods of the other features. For example, the X features include a feature 1 and a feature 2, and collection periods of the feature 1 and the feature 2 are respectively 1s and 2s. The first device determines 1s as a candidate collection period of the feature 1, and determines 3s and 4s as candidate collection periods of the feature 2.

Step 8012. After the first device determines candidate collection periods of the X features, the first device combines the candidate collection periods of the X features based on a combination policy, to obtain a plurality of candidate collection policies.

Each candidate collection policy includes a candidate collection period of each of the X features. The combination policy includes a random combination policy or another policy. The random combination policy is to randomly combine the candidate collection periods of the X features, to obtain the candidate collection policies including a candidate collection period of each of the X features. For another combination policy, for example, an r^{th} candidate collection period of each of the X features is combined into a candidate collection policy, where r is greater than 1 and less than or equal to a target number, and the target number is a quantity of candidate collection periods of a feature having a maximum quantity of candidate collection periods.

Step 8013. The first device determines a candidate collection period of each feature in a first candidate collection policy in the plurality of candidate collection policies as a first candidate collection period of each feature.

The first candidate collection policy is any one of the plurality of candidate collection policies.

802. The first device obtains a first training dataset D1.

Each training dataset in embodiments of this application is for training a machine learning model. For example, the first training dataset D1 is for training a machine learning model. The first training dataset D1 includes sampled data of the X features, that is, D1 = {d1₁, ..., d1ᵢ, ..., d1ₓ}, where d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X.

In a possible implementation, the first device obtains the first training dataset D1 from a second device, for example, the processes shown in the following steps 811 to 814.

Step 811. The first device sends a first data collection request to the second device, where the first data collection request carries the first candidate collection policy.

The first data collection request indicates the second device to perform feature collection based on the first candidate collection policy and return collected data to the first device.

Step 812. The second device performs feature collection on data flows based on the first candidate collection policy in the first data collection request, to obtain the first training dataset D1.

The process shown in the step 812 is the same as the process in which the second device performs feature collection on the data flows based on the first collection policy in the step 602. Herein, the step 812 is not described again in embodiments of this application.

Step 813. The second device sends the first training dataset D1 to the first device.

Step 814. The first device receives the first training dataset D1 from the first device.

In another possible implementation, the first device locally obtains the first training dataset D1, for example, the processes shown in the following steps 821 to 825.

Step 821. The first device sends a second data collection request to the second device.

The second data collection request indicates the second device to perform feature collection based on minimum collection periods of the X features and send collected data to the first device. In a possible implementation, the second data collection request includes an identifier and a minimum collection period of each of the X features.

Step 822. The second device performs feature collection on data flows based on a minimum collection period of each feature in the second data collection request, to obtain initial sampled data of each feature.

The initial sampled data of each feature is obtained through sampling based on the minimum collection period of each feature. The initial sampled data of each feature includes a plurality of target sampling groups, and each target sampling group is data obtained by collecting a feature at a time.

In a possible implementation, after receiving the second data collection request, the first device obtains a minimum collection period of each of the X features from the second data collection request. For any feature in the X features, the feature of data flows is sampled based on a minimum collection period of the feature, to obtain initial sampled data of the feature.

Optionally, in a third time period, the feature of the data flows is sampled at intervals of the minimum collection period of the feature, to obtain a target sampling group of the feature. The first device determines a plurality of target data groups obtained by sampling the feature in the third time period as the initial sampled data of the feature.

Different duration may be set for the third time period based on an actual application scenario. In different application scenarios, the duration of the third time period may be different. Herein, the duration of the third time period is not limited in embodiments of this application.

Step 823. The second device sends the initial sampled data of each of the X features to the first device.

Step 824. The first device receives the initial sampled data of each of the X features.

The processes shown in the steps 821 to 824 are the processes in which the first device obtains the initial sampled data of the X features from the second device. In another possible implementation, if the second device has sent an initial training dataset D0 to the first device, and the initial training dataset D0 has been stored in the first device, the first device does not perform the processes shown in the steps 821 to 823, but obtains the initial sampled data of the X features from the locally stored initial training dataset D0.

Step 825. The first device generates the first training dataset D1 based on the first candidate collection period and the initial sampled data of each of the X features.

In a possible implementation, for an i^{th} feature in the X features, the first device determines, based on a first candidate collection period p1ᵢ of the i^{th} feature, sampled data d1ᵢ of the i^{th} feature in the first training dataset D0 from initial sampled data d0; of the i^{th} feature. For ease of description, the sampled data d1ᵢ of the i^{th} feature is used to denote first sampled data of the i^{th} feature.

In a possible implementation, if the first candidate collection period p1ᵢ of the i^{th} feature is an integer multiple of a minimum collection period of the i^{th} feature, the first device samples the initial sampled data of the i^{th} feature by using a target value as a sampling period, and stores sampled data in the first training dataset D1 as the first sampled data of the i^{th} feature. The target value is a ratio of the first candidate collection period p1ᵢ to the minimum collection period of the i^{th} feature.

For example, the initial sampled data of the i^{th} feature includes four target sampling groups, which are respectively target sampling groups 1 to 4, the minimum collection period of the i^{th} feature is 1s, and the first candidate collection period of the i^{th} feature is 2s. In this case, the target value is 2/1 = 2. The first device samples the four target sampling groups by using 2 as a sampling period. The target sampling group 2 and the target sampling group 4 are data obtained through sampling. In this case, the first device uses the target sampling group 2 and the target sampling group 4 as the first sampled data of the i^{th} feature.

In another example, FIG. 9 is a schematic diagram of processing sampled data at different granularities according to an embodiment of this application. In FIG. 9, the X features include features 1 to 8. A minimum collection period of the feature 1 and a minimum collection period of the feature 2 are both 10s, a minimum collection period of the feature 8 is 20s, candidate collection periods of the feature 1 and the feature 2 both include 30s, 60s, and 1 min, and candidate collection periods of the feature 8 include 60s and 2 min. Using the feature 8 as an example, a first candidate collection period of the feature 8 is 60s, and initial sampled data of the feature 8 includes six target sampling groups, which are respectively target sampling groups 1 to 6. By using 60/20 = 3 as a sampling period (that is, a target value), the first device uses the target sampling groups 3 and 6 in the six target sampling groups as first sampled data of the feature 8 in the first training dataset D1.

803. The first device obtains a first machine learning model based on the first training dataset D1.

The first machine learning model is obtained through training based on the first training dataset D1. The process shown in the step 803 is the same as the process in which the first device obtains the reference model based on the target training dataset Dz. Herein, the step 803 is not described again in embodiments of this application.

804. If the first machine learning model satisfies a first condition, determine the candidate collection period p1ᵢ of the i^{th} feature in the X features as a target collection period of the i^{th} feature, where the target collection period of the i^{th} feature is greater than a minimum collection period of the i^{th} feature.

The target collection period of each feature is a collection period of each feature in subsequent actual application. The first condition includes that model precision of a machine learning model is greater than or equal to a model precision threshold. If model precision of the first machine learning model is greater than or equal to a model precision threshold, the first machine learning model satisfies the first condition, indicating that the model precision of the first machine learning model satisfies a requirement of a user for a machine learning model during actual application. In this case, the first device determines a first candidate collection period of each of the X features as a target collection period of each feature.

Because a candidate collection period of each feature is greater than a minimum collection period of each feature, if the candidate collection period of each feature is determined as a target collection period of each feature (for example, the candidate collection period p1ᵢ of the i^{th} feature is determined as the target collection period of the i^{th} feature), the target collection period of each feature is greater than the minimum collection period of each feature.

The processes shown in the steps 801 to 804 are the processes in which the first device determines a target collection period of each feature based on a candidate collection period of each of the X features.

In another possible implementation, the first device sends a plurality of candidate collection policies to the second device, and the second device performs feature collection based on each candidate collection policy to obtain a plurality of training datasets, and sends the plurality of training datasets to the first device. Each training dataset includes sampled data of the X features, and sampled data of each feature is obtained through sampling based on a candidate collection period of each feature in a candidate collection policy. After receiving the plurality of training datasets, the first device obtains a plurality of machine learning models based on the plurality of training datasets, and determines, if any model in the plurality of machine learning models satisfies the first condition, a candidate collection period of each feature in a candidate collection policy corresponding to a training dataset for training the model as a target candidate collection period of each feature.

In a possible implementation, the method shown in FIG. 8 further includes the following steps 805 to 807.

805. The first device updates the second collection policy to a third collection policy.

In a possible implementation, the first device updates a collection period of each of the X features in the second collection policy to a target collection period of each feature, to obtain the third collection policy.

In a possible implementation, the first device determines the first candidate collection policy as the third collection policy, and replaces the stored second collection policy with the third collection policy.

After the first device updates the second collection policy to the third collection policy, a current collection policy is the third collection policy, and the second collection policy is a historical collection policy used during policy update this time.

806. The first device sends the third collection policy to the second device.

807. The second device receives the third collection policy.

In a possible implementation, after receiving the third collection policy, the second device performs feature collection on currently transmitted data flows based on the third collection policy, to obtain a new training dataset, and the second device sends the new training dataset to the first device. The first device obtains a target machine learning model based on the new training dataset, and outputs the target machine learning model, so that a terminal can actually apply the target machine learning model, so as to update the machine learning model online. The target machine model is obtained through training based on the new training dataset, and is also a machine learning model used by a user during actual application.

According to the method provided in this embodiment of this application, a machine learning model is obtained by using a training dataset collected based on candidate collection periods of X features, and a candidate collection period of each of the X features is determined as a target collection period of each feature based on the obtained machine learning model and a first condition. Because the target collection period of each feature is greater than a minimum collection period of each feature, subsequently, if data is collected based on the target collection period of each feature, an amount of the collected data is reduced, to reduce collection load of a device and memory occupied by sampled data, thereby reducing time redundancy.

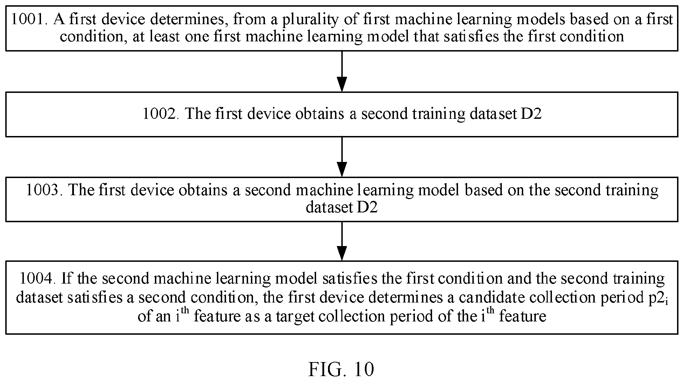

The processes shown in the steps 801 to 804 are the processes in which the first device determines the target collection period of each of the X features based on the first condition. In another possible implementation, the first device determines a target collection period of each feature from a plurality of candidate collection periods of each of the X features based on the first condition and another condition. For example, FIG. 10 is a flowchart of another method for determining a collection period according to an embodiment of this application.

1001. The first device determines, from a plurality of first machine learning models based on a first condition, at least one first machine learning model that satisfies the first condition.

For each of a plurality of candidate collection policies (refer to the step 801), the first device performs the processes shown in the steps 801 to 803, so that the first device can obtain a plurality of first machine learning models, and each first machine learning model is obtained through training by using a first training dataset D1 collected based on a candidate collection policy.

In a possible implementation, the processes shown in 801 to 803 performed for the plurality of candidate collection policies may be simultaneously performed. For example, the first device sends a plurality of candidate collection policies to the second device, and the second device performs feature collection based on the plurality of candidate collection policies to obtain a plurality of first training datasets D1. Each first training dataset D1 is obtained through sampling based on a candidate collection policy (that is, each first training dataset D1 corresponds to a candidate collection policy). In addition, the second device sends the plurality of first training datasets D1 to the first device, and the first device obtains a plurality of first machine learning models based on the plurality of first training datasets D1. Each first machine learning model is obtained through training based on a piece of first training data.

In a possible implementation, the processes shown in 801 to 803 performed for the plurality of candidate collection policies may be sequentially performed. For example, the first device sequentially performs the processes shown in the steps 801 to 803 on each of the plurality of candidate collection policies. After performing the processes shown in the steps 801 to 803 for a plurality of times, the first device obtains a plurality of first machine learning models.

After the first device obtains the plurality of first machine learning models, the first device determines, from the plurality of first machine learning models based on a first condition, at least one first machine learning model that satisfies the first condition.

In a possible implementation, for any model in the plurality of first machine learning models, if model precision of the model is greater than or equal to a model precision threshold, the model can satisfy a user requirement during actual use. In this case, the first device determines that the model satisfies the first condition.

For example, the plurality of first training datasets D1 include training datasets 1 to 4, and first machine learning models obtained through training based on the four training datasets are machine learning models 1 to 4 respectively. Model precision of the machine learning models 1 to 4 is shown in Table 2 below. If a model precision threshold is 90%, the model precision of each of the machine learning models 1 to 3 is greater than the model precision threshold. In this case, the machine learning models 1 to 3 all satisfy the first condition.

**Table 2**

| Training dataset | Machine learning model | Model precision |
|---|---|---|
| Training dataset 1 | Machine learning model 1 | 93.1% |
| Training dataset 2 | Machine learning model 2 | 92.3% |
| Training dataset 3 | Machine learning model 3 | 90.3% |
| Training dataset 4 | Machine learning model 4 | 87.8% |

1002. The first device obtains a second training dataset D2.

The second training dataset D2 is for training a machine learning model, and the second training dataset D2 includes sampled data of the X features, that is, D2 = {d2₁, ..., d2ᵢ, ..., d2ₓ}, where d2ᵢ represents sampled data of the i^{th} feature, and d2ᵢ is sampled data obtained by sampling the i^{th} feature based on a candidate collection period p2;. To distinguish from the sampled data in the first training dataset D1, d2; is used to denote second sampled data of the i^{th} feature, and the candidate collection period p2; is used to denote a second candidate collection period of the i^{th} feature. A second candidate collection period of each feature is greater than a minimum collection period of each feature.

For ease of description, a candidate collection policy corresponding to each first training dataset D1 is used to denote a first candidate collection policy.

In a possible implementation, the first device receives the second training dataset D2 from the second device, for example, the following steps 11 to 14.

Step 11. The first device sends a second candidate collection policy to the second device, where the second candidate collection policy indicates a second candidate collection period of each of the X features.

The second candidate collection policy includes feature identifiers of the X features and a candidate collection period set P2, and the candidate collection period set P2 includes candidate collection periods of the X features, that is, P2 = {p2₁, ..., p2ᵢ, ..., p2ₓ}. For ease of description, the candidate collection period set P2 is used to denote a second candidate collection period, and p2; is used to denote a second candidate collection period of the i^{th} feature.

In a possible implementation, the first device sends a third data request to the second device. The third data request includes the second candidate collection policy. The third data collection request indicates the second device to perform feature collection based on the second candidate collection policy and return collected sampled data to the first device.

Step 12. The second device performs feature collection on data flows based on the second candidate collection policy, to obtain a second training dataset D2.

In a possible implementation, after receiving the third data collection request from the first device, the second device obtains the second candidate collection policy from the third data collection request. The second device performs feature collection on the data flows based on a second candidate collection period of each feature in the second candidate collection policy, to obtain second sampled data of each feature, and forms the second training dataset D2 including second sampled data of the X features.

Step 13. The second device sends the second training dataset D2 to the first device.

Step 14. The first device receives the second training dataset D2.

In a possible implementation, the process shown in the step 1002 and the process in which the first device obtains the plurality of first training datasets D1 are simultaneously performed. For example, the first device sends the second candidate collection policy and the plurality of first candidate collection policies together to the second device, and the second device sends the second training dataset D2 and the plurality of first training datasets D1 to the first device. In this case, the first device first performs the step 1002, and then performs the step 1001. Herein, a sequence of performing the step 1001 and the step 1002 is not limited in embodiments of this application.

1003. The first device obtains a second machine learning model based on the second training dataset D2.

The second machine learning model is obtained through training based on the second training dataset D2.

The process shown in the step 1003 is the same as the process in which the first device obtains the reference model based on the target training dataset Dz. Herein, the step 1003 is not described again in embodiments of this application.

1004. If the second machine learning model satisfies the first condition and the second training dataset D2 satisfies a second condition, the first device determines the candidate collection period p2; of the i^{th} feature as the target collection period of the i^{th} feature.

That the second training dataset D2 satisfies the second condition includes that a data amount of the second training dataset D2 in a target time period is less than a data amount of the first training dataset D1 in the target time period. The data amount of the second training dataset D2 in the target time period is a total data amount of second sampled data of X features that is in the second training dataset D2 and that is collected in the target time period. The data amount of the first training dataset D1 in the target time period is a total data amount of first sampled data of X features that is in the first training dataset D1 and that is collected in the target time period. Optionally, duration of the target time period is greater than or equal to a maximum candidate collection period in the candidate collection period set P2, that is, P2 = {p2ᵢ, ..., p2ᵢ, ..., p2ₓ}, so that the sampled data that is in the second training dataset D2 and that is collected in the target time period can include sampled data of each of the X features.

In a possible implementation, the "first training dataset" of the data amount of the first training dataset D1 in the target time period is at least one first training dataset D1 corresponding to at least one first machine learning model that satisfies the first condition.

The essence of the second condition is as follows: If a plurality of machine learning models all satisfy the first condition, a training dataset with a minimum data amount in the target time period is determined from a plurality of training datasets corresponding to the plurality of machine learning models. In this way, when model precision of a machine learning model is ensured, a data amount of a training dataset is reduced, to reduce collection load of a device and memory occupied by sampled data. The plurality of machine learning models include the at least one first machine model that satisfies the first condition and the second machine learning model that satisfies the first condition. The plurality of training datasets corresponding to the plurality of machine learning models include the at least one first training dataset D1 and the second training dataset D2.

In a possible implementation, if the second machine learning model satisfies the first condition, and a data amount of the second training dataset D2 in a target time period is less than a data amount of each of the at least one first training dataset D1 in the target time period, the second training dataset D2 satisfies the second condition. In addition, it can also indicate that, compared with the at least one first candidate collection policy, if an amount of data collected based on the second candidate collection policy is smaller in a same time period, sampled data collected subsequently based on the second candidate collection policy can not only ensure performance of a machine learning model obtained through training, but also not be excessive. Therefore, the first device determines a second candidate collection period of each of the X features as a target collection period of each feature.

Still based on the example described in Table 2, the at least one first training dataset D1 includes training datasets 1 to 3. Duration of a target time period is 2 min. If the training datasets 1 to 3 are all sampled data collected within 10 min, the first device separately counts data amounts of sampled data in the training datasets 1 to 3 within 2 min, which are respectively 10 KB, 20 KB, and 30 KB. When the second machine learning model also satisfies the first condition, if the second training dataset D2 is sampled data collected within 5 min, and a data amount of sampled data in the second training dataset D2 within 2 min is 5 KB, due to 5 KB < 10 KB < 20 KB < 30 KB, the second training dataset D2 satisfies the second condition. In this case, the first device determines a second candidate collection period of each of the X features as a target collection period of each feature.

In a possible implementation, if the second training dataset D2 does not satisfy the second condition, the first device determines, from the at least one first training dataset D1, a first training dataset D1 with a minimum data amount in a target time period. The determined first training dataset D1 satisfies the second condition, so that the first device determines a candidate collection period of each feature in a first candidate collection policy corresponding to the determined first training dataset D1 as a target collection period of each feature.

Still based on the example shown in Table 2, if data amounts of sampled data in the training datasets 1 to 3 within 2 min are respectively 10 KB, 20 KB, and 30 KB, and a data amount of sampled data in the second training dataset within 2 min is 15 KB, due to 15 KB > 10 KB, the second training dataset does not satisfy the second condition, but 10 KB < 15 KB < 20 KB < 30 KB, the training dataset 1 satisfies the second condition. In this case, the first device determines a candidate collection period of each feature in a first candidate policy corresponding to the training dataset 1 as a target collection period of each feature.

In a possible implementation, if the second machine model satisfies the first condition, and collection duration of each of the at least one first training dataset D1 is the same as collection duration of the second training dataset D2, the first device does not need to separately count data amounts of the at least one first training dataset D0 and the second training dataset D2 in a target time period. The first device counts a total data amount of each of the at least one first training dataset D1 and the second training dataset D2. A training dataset with a minimum total data amount in the at least one first training dataset D1 and the second training dataset D2 satisfies the second condition.

Still based on the example shown in Table 2, if both the training datasets 1 to 3 and the second training dataset D2 are sampled data collected within 10 min, data amounts of the training datasets 1 to 3 and the second training dataset D2 are respectively 100 KB, 200 KB, 300 KB, and 50 KB. Due to 50 KB < 100 KB < 200 KB < 300 KB, the second training dataset D2 satisfies the second condition.

In a possible implementation, if the second machine learning model does not satisfy the first condition, and collection duration of each of the at least one first training dataset D1 is the same collection duration, the first device does not need to count a data amount of each of the at least one first training dataset D1 in a target time period. The first device counts a total data amount of each of the at least one first training dataset D1. A training dataset with a minimum total data amount in the at least one first training dataset D1 satisfies the second condition.

In a possible implementation, after the step 1004 is performed, the first device updates the locally stored second collection policy to a candidate policy corresponding to a training dataset that satisfies the second condition, and denotes the updated policy by a third collection policy. The first device sends the third collection policy to the second device, so that the second device sends a new training dataset to the first device based on the third collection policy. The first device obtains a target machine learning model based on the new training dataset, and outputs the target machine learning model, so that a terminal can actually apply the target machine learning model, so as to update the machine learning model online.

According to the method provided in this embodiment of this application, when the first device obtains the second machine model based on the second training dataset D2, if the second machine learning model satisfies the first condition and the second training dataset D2 satisfies the second condition, a second candidate collection period of each feature is determined as a target collection period of each feature. The first condition is essentially to screen out a machine learning model that satisfies a performance requirement, and the second condition is essentially to screen out a training dataset with a small data amount. Therefore, if the second machine learning model satisfies the first condition and the second training dataset D2 satisfies the second condition, the second machine learning model can satisfy the performance requirement, and the second training dataset D2 has a small data amount. If the second candidate collection period of each feature is used as the target collection period of each feature, model precision of a machine learning model that is obtained through subsequent training by using sampled data collected based on the target collection period of each feature can also be satisfied, and the sampled data collected based on the target collection period of each feature has a small data amount, to reduce collection load and occupied memory.

The process shown in FIG. 6 is reduction of space redundancy, and the process shown in FIG. 8 or FIG. 10 is reduction of time redundancy. In a possible implementation, the process shown in FIG. 6, FIG. 8, or FIG. 10 is periodically performed. The process shown in FIG. 6 is periodically performed, so as to periodically reduce feature dimensions, thereby periodically reducing space redundancy. The process shown in FIG. 8 or FIG. 10 is periodically performed, so as to periodically increase a collection period of a feature, thereby periodically reducing time redundancy while ensuring performance of a machine learning model.

For example, after the process shown in FIG. 6 is performed, features currently for training the machine model are the X features. After first preset duration, the process shown in FIG. 6 is performed again for the X features, to further reduce dimensions of the X features.

In another example, after the process shown in FIG. 6 is performed, the process shown in FIG. 8 or FIG. 10 is performed (that is, reduction of time redundancy is performed on the X features). Then, after second preset duration, the process shown in FIG. 6 is performed again, to further reduce dimensions of the X features.

In another example, after performing the process shown in FIG. 8 or FIG. 10, the first device performs, after third preset duration, the process shown in FIG. 8 or FIG. 10 again for target collection periods of the X features, to increase the target collection periods of the X features, so as to further reduce time redundancy of the X features.

In another example, after performing the process shown in FIG. 8 or FIG. 10, the first device performs, after fourth preset duration, the process shown in FIG. 6 again for the X features, to further reduce dimensions of the X features. Then, for target collection periods of remaining features of the X features after dimension reduction, the process shown in FIG. 8 or FIG. 10 is performed again, to increase the target collection periods of the remaining features, so as to further reduce time redundancy of the remaining features.

The foregoing processes shown in FIG. 5, FIG. 6, FIG. 8, and FIG. 10 are all described by using an example in which the first device and the second device are two independent devices. The first device mainly adjusts, in an assessment manner, a dimension and collection period of a feature for training a machine learning model. Therefore, the first device is sometimes referred to as an assessment unit. The second device is mainly responsible for data collection. Therefore, the second device is sometimes referred to as a data collection unit. A system formed by the assessment unit and the data collection unit is mainly responsible for data collection, determining a collection period, determining a feature, and the like. The system may also be named a data collection system, a system for determining a collection period, a system for determining a feature, or the like.

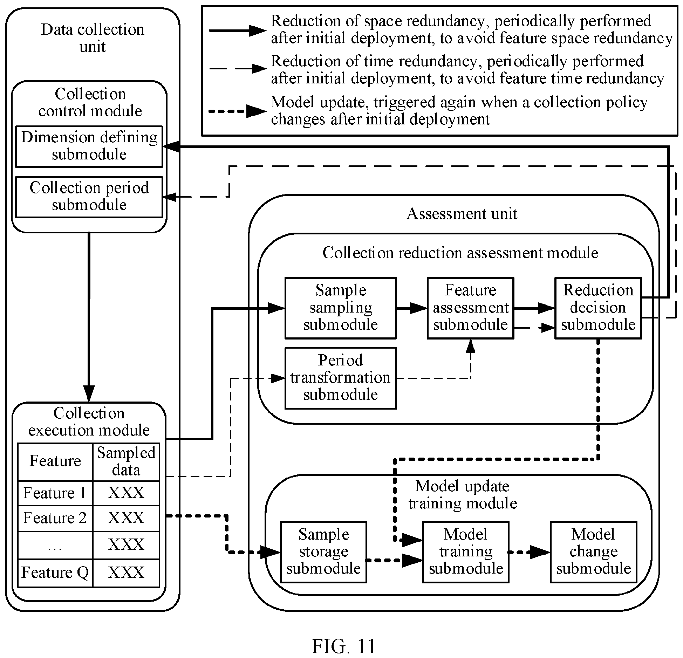

For further description, for the processes in which the assessment unit and the data collection unit implement reduction of space redundancy, reduction of time redundancy, and model update by exchanging data, refer to a flowchart of data processing according to an embodiment of this application shown in FIG. 11. In FIG. 11, the assessment unit includes a collection reduction assessment module and a model update training module. The collection reduction assessment module includes a sample sampling submodule, a period transformation submodule, a feature assessment submodule, and a reduction decision submodule. The model update training module includes a sample storage submodule, a model training submodule, and a model change submodule. The data collection unit includes a collection control module and a collection execution module. The collection control module includes a dimension defining submodule and a collection period submodule.

During reduction of space redundancy, the reduction decision submodule sends a first collection policy to the dimension defining submodule, and the collection execution module performs, based on the first collection policy, feature collection on data flows output by the data collection unit, to obtain a training dataset. The collection execution module sends the training dataset to a sample collection module and the sample storage submodule. The sample collection module intercepts first sampled data of Z features collected in specific duration in the training dataset, and sends the intercepted first sampled data of the Z features to the feature assessment submodule. The feature assessment submodule assesses importance degrees of the Z features based on the first sampled data of the Z features, determines X features from the Z features based on the importance degrees of the Z features, and notifies the reduction decision submodule of the determined X features. The reduction decision module updates the stored first collection policy to a second collection policy based on the X features, and sends the second collection policy to the model training submodule. The reduction of space redundancy is periodically performed after initial deployment, to avoid feature space redundancy.

During reduction of time redundancy, the reduction decision module sends a target collection instruction to the collection period submodule, and the collection period submodule sends a minimum collection period of the X features to the collection execution module based on the target collection instruction. The collection execution module performs, based on the minimum collection period of the X features, feature collection on output data flows, to obtain initial sampled data of each feature, and sends the initial sampled data of each feature to the period transformation submodule. The period transformation submodule determines a plurality of candidate collection policies, samples the initial sampled data of each feature based on each candidate collection policy to obtain a plurality of training datasets, and sends the plurality of training datasets to the feature assessment submodule. The feature assessment submodule performs training based on the plurality of training datasets, determines target collection periods of the X features based on model precision of a plurality of machine learning models obtained through training and data amounts of the plurality of training datasets in a target time period, and sends the target collection periods of the X features to the reduction decision module. The reduction decision module updates the stored second collection policy to a third collection policy based on the target collection periods of the X features, and sends the third collection policy to the model training submodule. The reduction of time redundancy is periodically performed after initial deployment, to avoid feature time redundancy.

During model update, each time a collection policy is obtained, the model training model samples, based on collection periods of features in the collection policy, initial sampled data of each feature stored in the sample storage module, to obtain a new training dataset. The model training model performs training based on the new training dataset to obtain a new machine learning module, and sends the machine learning model to the model change submodule. The model change submodule updates a current machine learning model to the new machine learning model. The model update is triggered again each time the collection policy changes after initial deployment.

The foregoing process shown in FIG. 6 is the process of reducing dimensions of Z features in a current collection policy. However, if distribution of service data in the data flows transmitted by the second device significantly drifts or an application scenario changes, an impact of the Z features indicated by the current collection policy on the machine learning model obtained through training may decrease, and an impact of a deleted feature in a full feature on the machine learning model obtained through training may increase. If the sampled data of the Z features indicated by the current collection policy is used, model precision of the machine learning model obtained through training may not reach a model precision threshold. In addition, if dimensions of the Z features are further reduced, model precision of a machine learning model obtained through subsequent training may not reach the model precision threshold either.

In another possible implementation, if distribution of service data in the data flows transmitted by the second device significantly drifts or an application scenario changes, the first device uses an update manner of a full reset policy, discards the current collection policy, and re-performs the processes shown in the foregoing steps in FIG. 5 and FIG. 6 for a full feature.

For example, after the process shown in FIG. 6 is performed in an initialization phase, if distribution of service data in the data flows transmitted by the second device significantly drifts or an application scenario changes subsequently, a user re-delivers a new configuration instruction to the first device. A model precision threshold in the new configuration instruction may be inconsistent with or may be consistent with a model precision threshold in the configuration instruction obtained in the initialization phase. In this case, after obtaining the new configuration instruction delivered by the user, the first device re-performs the process shown in FIG. 5, and then re-performs the process shown in FIG. 6 for the full feature.

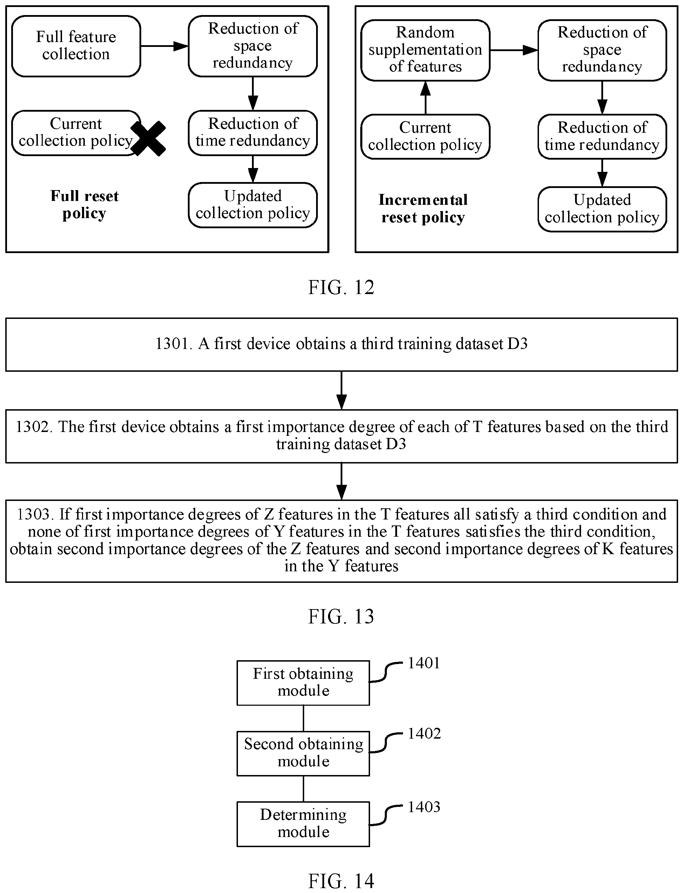

To further describe the update manner of the full reset policy, refer to a flowchart of a full reset policy shown in a left panel in FIG. 12. FIG. 12 is a schematic diagram of iterative update of a collection policy according to an embodiment of this application. In the left panel in FIG. 12, the first device discards a current collection policy, and the second device performs full feature collection on data flows based on an initial collection policy, to obtain an initial training dataset. The first device performs a process of reduction of space redundancy based on the initial training dataset, performs a process of reduction of time redundancy on remaining features after the reduction of space redundancy, and updates the initial collection policy based on a target collection period of each remaining feature determined based on the reduction of time redundancy.

In a possible implementation, if distribution of service data in the data flows output by the second device slightly changes, an impact of a deleted feature in a full feature on the machine learning model obtained through training may increase, and an impact of a feature indicated by a current collection policy on the machine learning model obtained through training may decrease.

In this case, if the sampled data obtained based on the current collection policy is used, model precision of the machine learning model obtained through training may not reach a model precision threshold. In this case, the first device may further add some features that have been deleted from the full feature into the current collection policy when performing reduction of space redundancy next time, and then perform reduction of space redundancy on the collection policy into which the features are added, so as to dynamically adjust feature dimensions in a manner of an incremental update policy. To further describe the process, refer to a flowchart of an incremental update policy according to an embodiment of this application shown in FIG. 13.

1301. The first device obtains a third training dataset D3.

The third training dataset D3 is for training a machine learning model, and the third training dataset D3 includes sampled data of T features, that is, D3 = {d3₁, ..., d3_{w}, ..., d3_{T}}, where d3_{w} represents sampled data of a w^{th} feature in the T features, T is an integer greater than 2, and w is an integer greater than 0 and less than or equal to T. Optionally, T is greater than 2 and less than or equal to F. The third training dataset D3 is obtained through collection based on a current collection policy. The current collection policy indicates collection periods of the T features. For example, the current policy includes identifiers of the T features and a collection period set P3, and the collection period set P3 includes the collection periods of the T features, that is, P3 = {p3₁, ..., p3_{w}, ..., p3_{T}}, where p3_{w} is a collection period of the w^{th} feature. For ease of description, the foregoing first candidate collection period set is denoted by a first collection period set, the second candidate collection period set is denoted by a second collection period set, and the collection period set P3 is denoted by a fourth collection period set.

In a possible implementation, the first device sends a current collection policy to a second device, and the second device performs feature collection on data flows based on collection periods of T features in the collection policy, to obtain the third training dataset D3, and sends the third training dataset D3 to the first device. In this case, d3_{w} is obtained through sampling based on the collection period p3_{w} in the third collection period set P3.

1302. The first device obtains a first importance degree of each of the T features based on the third training dataset D3.

The process shown in the step 1302 is also the process in which the first device obtains the first importance degrees of the T features. The first importance degree of each of the T features is an importance degree of each feature obtained based on the sampled data of the T features. The process shown in the step 1302 is the same as the process shown in the step 6041. Herein, the step 1302 is not described again in embodiments of this application.

1303. If first importance degrees of Z features in the T features all satisfy a third condition and none of first importance degrees of Y features in the T features satisfies the third condition, obtain second importance degrees of the Z features and second importance degrees of K features in the Y features.

The K features are some of the Y features. A second importance degree of each of the Z features and the K features is an importance degree of each feature obtained based on sampled data of the Z features and the K features. Both Z and Y are integers less than T, and K is an integer greater than 0 and less than Y

If importance degrees of the Z features in the T features satisfy the third condition and importance degrees of the Y features in the T features do not satisfy the third condition, the first device deletes collection periods of the Y features in the current collection policy. The collection policy after deletion includes collection periods of the Z features, and the collection policy after deletion indicates the collection periods of the Z features. For ease of description, the collection policy after deletion is denoted by a first collection policy. In this case, the first device updates the previous collection policy to the first collection policy, to complete a process of reduction of space redundancy.

After the first collection policy is determined, if distribution of service data in the data flows output by the second device slightly changes, features that have been deleted may include features that have a great impact on a machine learning model obtained through training. To avoid omitting these features, the first device further screens K features out of Y features that have been deleted, and adds collection periods of the K features (for example, minimum collection periods of the K features) into the first collection policy, so that the first collection policy is updated to a fourth collection policy. The fourth collection policy includes an identifier of each of the Z features and the K features, and a collection period set P4, and the collection period set P4 includes a collection period of each of the Z features and the K features, that is, P4 = {p4₁, ..., p4ᵥ, ..., p4_{Z+K}}, where p4ᵥ is a collection period of a v^{th} feature in the Z features and the K features, and v is an integer greater than 0 and less than or equal to Z+K. For ease of description, the collection period set P4 is denoted by a fourth collection period set.

The first device sends the fourth collection policy to the second device, and the second device performs feature collection on data flows based on the fourth collection policy to obtain a fourth training dataset D4, and sends the fourth training dataset D4 to the first device. The fourth training dataset D4 is for training a machine learning model, and the fourth training dataset D4 includes sampled data of the Z features and sampled data of the K features, that is, D4 = {d4i, ..., d4ᵥ, ..., d4_{Z+K}}, where d4ᵥ represents sampled data of the v^{th} feature, and d4ᵥ is the sampled data obtained through sampling based on the collection period p4ᵥ of the v^{th} feature.

After obtaining the fourth training dataset D4, the first device obtains a second importance degree of each of the Z features and the K features based on the fourth training dataset D4. The process in which the first device obtains the second importance degree of each of the Z features and the K features based on the fourth training dataset D4 is similar to the process shown in the step 6041. Herein, the process in which the first device obtains the second importance degree of each of the Z features and the K features based on the fourth training dataset D4 is not described again in embodiments of this application.

After the first device obtains the second importance degree of each of the Z features and the K features, the first device determines features, in the Z features and the K features, that satisfy the third condition as the X features. For example, if a second importance degree of any feature in the Z features and the K features is greater than or equal to a threshold of a degree of impact, the feature satisfies the third condition. After the X features are determined, the first device updates the fourth collection policy to a second collection policy.

To further describe the update manner of the incremental update policy shown in FIG. 13, refer to a flowchart of an incremental reset policy shown in a right panel in FIG. 12. The first device randomly supplements a feature in the current collection policy (that is, the first collection policy), performs a process of reduction of space redundancy for a collection policy after supplementation (that is, the fourth collection policy), performs a process of reduction of time redundancy on remaining features after the reduction of space redundancy, and updates the collection policy based on a new target collection period of each remaining feature determined based on the reduction of time redundancy.

The foregoing method embodiments are described by using an example in which the first device and the second device are two independent devices. In another possible implementation, the first device used as an assessment unit and the second device used as a data collection unit are located on a same target device. In this case, all steps in the foregoing method embodiments can be performed by the target device. Optionally, the target device is an embedded device.

The method in embodiments of this application is described above, and the following describes an apparatus in embodiments of this application. It should be understood that the apparatus described below has any function of the first device or the second device in the foregoing method.

FIG. 14 is a schematic diagram of a structure of an apparatus for determining a collection period according to an embodiment of this application. Refer to FIG. 14. The apparatus 1400 may be the first device or a part of the first device in the foregoing embodiments, and is configured to perform the method performed by the first device. The apparatus 1400 includes:
a first obtaining module 1401, configured to obtain a first training dataset D1, where the first training dataset D1 is for training a machine learning model, and the first training dataset D1 includes sampled data of X features, that is, D1 = {d1₁, ..., d1ᵢ, ..., d1ₓ}, where d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X;
a second obtaining module 1402, configured to obtain a first machine learning model based on the first training dataset D1; and
a determining module 1403, configured to determine, if the first machine learning model satisfies a first condition, the candidate collection period p1ᵢ of the i^{th} feature as a target collection period of the i^{th} feature, where the target collection period of the i^{th} feature is greater than a minimum collection period of the i^{th} feature.

Optionally, the first obtaining module 1041 is further configured to obtain a second training dataset D2. The second training dataset D2 is for training a machine learning model, and the second training dataset D2 includes sampled data of the X features, that is, D2 = {d2₁, ..., d2ᵢ, ..., d2ₓ}, where d2ᵢ represents sampled data of the i^{th} feature, d2ᵢ is sampled data obtained by sampling the i^{th} feature based on a candidate collection period p2ᵢ, and p2; is a candidate collection period of the i^{th} feature.

The second obtaining module 1402 is further configured to obtain a second machine learning model based on the second training dataset D2.

The determining module 1403 is further configured to determine, if the second machine learning model satisfies the first condition and the second training dataset D2 satisfies a second condition, the candidate collection period p2; of the i^{th} feature as the target collection period of the i^{th} feature.

Optionally, the first obtaining module 1401 is further configured to obtain the first training dataset D1 or the second training dataset D2 from a second device.

Optionally, that the second training dataset D2 satisfies the second condition includes:

A data amount of the second training dataset D in a target time period is less than a data amount of the first training dataset D1 in the target time period.

Optionally, duration of the target time period is greater than or equal to a maximum candidate collection period in a candidate collection period set P2, and the candidate collection period set P2 includes candidate collection periods of the X features, that is, P2 = {p2₁, ..., p2ᵢ, ..., p2ₓ}.

Optionally, the determining module 1403 is further configured to:
determine the X features from Z features. Importance degrees of the X features all satisfy a third condition, an importance degree of each feature indicates a degree of impact of each feature on a machine learning model obtained through training, Z is an integer greater than 1, and X is an integer greater than 0 and less than or equal to Z.

Optionally, the apparatus 1400 further includes:
a third obtaining module 1404, configured to obtain first importance degrees of T features, where a first importance degree of each feature is an importance degree of each feature obtained based on sampled data of the T features, the importance degree of each feature indicates a degree of impact of each feature on a machine learning model obtained through training, and T is an integer greater than 2.

The third obtaining module 1404 is further configured to obtain, if first importance degrees of Z features in the T features all satisfy a third condition and none of first importance degrees of Y features in the T features satisfies the third condition, second importance degrees of the Z features and second importance degrees of K features in the Y features. A second importance degree of each feature is an importance degree of each feature obtained based on sampled data of the Z features and the K features, Z and Y are both integers less than T, and K is an integer greater than 0 and less than Y

The determining module 1403 is further configured to determine the X features from the Z features and the K features. Second importance degrees of the X features all satisfy the third condition.

Optionally, the third condition includes that an importance degree of a feature is greater than or equal to a threshold of a degree of impact.

Optionally, the first condition includes that model precision of a machine learning model is greater than or equal to a model precision threshold.

Optionally, the apparatus 1400 is an embedded device.

It should be understood that the apparatus 1400 corresponds to the first device in the foregoing method embodiments, and the modules and the foregoing other operations and/or functions in the apparatus 1400 are respectively for implementing the steps and methods implemented by the first device in the method embodiments. For specific details, refer to the foregoing method embodiments. For brevity, details are not described herein again.

It should be understood that when the apparatus 1400 determines a target collection period of a feature, division of the foregoing functional modules is merely used as an example for description. In actual application, the foregoing functions may be allocated to different functional modules for implementation as required. That is, an internal structure of the apparatus 1400 is divided into different functional modules to implement all or some of the functions described above. In addition, the apparatus 1400 provided in the foregoing embodiment and the foregoing method embodiments pertain to a same concept. For a specific implementation process, refer to the foregoing method embodiments. Details are not described herein again.

It should be understood that the apparatus 1400 may be equivalent to the assessment unit 101 in the system 100, or equivalent to an execution component in the assessment unit 101.

In some embodiments, the first obtaining module 1401 is further configured to perform feature collection on data flows based on a first candidate collection policy, to obtain the first training dataset. The second candidate collection policy indicates a first candidate collection period of each of the X features. Alternatively, in some embodiments, the first obtaining module 1401 is further configured to perform feature collection on data flows based on a second candidate collection policy, to obtain the second training dataset. The second candidate collection policy indicates a second candidate collection period of each of the X features. It should be understood that, in this case, the apparatus 1400 further has a function of the second device or the data collection unit.

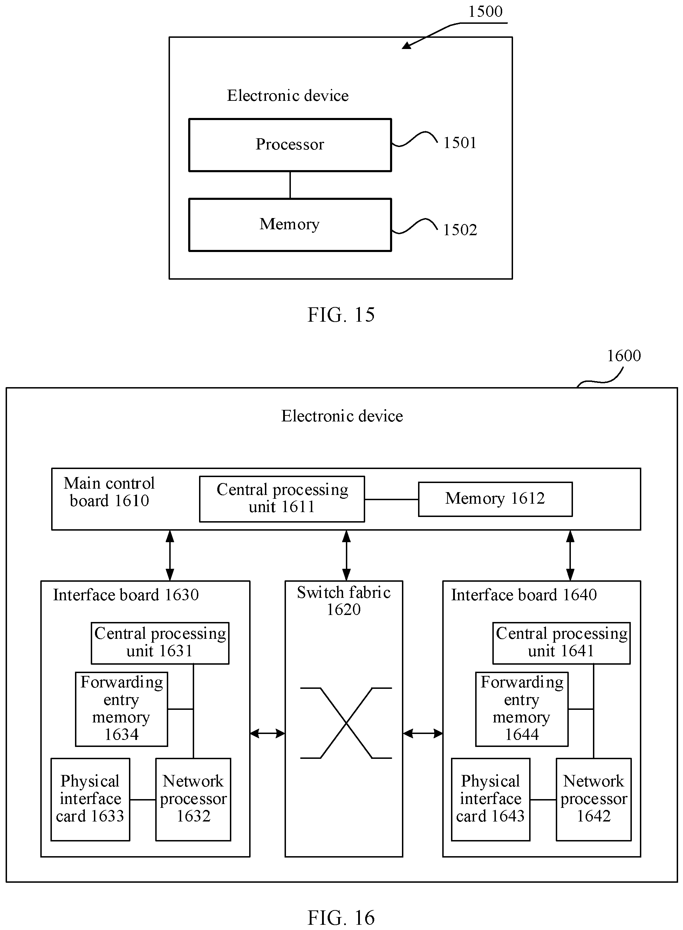

FIG. 15 is a schematic diagram of a structure of an electronic device according to an embodiment of this application. It should be understood that the device 1500 described below may implement any function of the first device or the second device in any one of the foregoing methods.

The electronic device 1500 includes one or more processors 1501 and one or more memories 1502. The one or more memories 1502 are coupled to the one or more processors 1501. The one or more memories 1502 are configured to store program code. The program code includes computer instructions. When the one or more processors 1501 execute the computer instructions, the electronic device 1500 is enabled to perform the foregoing related method steps to implement the method for determining a collection period in the foregoing embodiments. The electronic device 1500 may be configured as the first device or the second device provided in embodiments of this application. If the electronic device 1500 is configured as the first device, the electronic device can perform the steps performed by the first device in the foregoing embodiments. If the electronic device 1500 is configured as the second device, the electronic device 1500 can perform the steps performed by the second device in the foregoing embodiments. If functional units of the first device and the second device are integrated in the electronic device 1500, the electronic device can perform the steps performed by the first device and the second device in the foregoing embodiments. Certainly, the electronic device 1500 may further have components such as a wired or wireless network interface, a keyboard, and an input/output interface, to perform inputting/outputting. The electronic device 1500 may further include another component configured to implement a device function. Details are not described herein.

FIG. 16 is a schematic diagram of a structure of an electronic device according to an embodiment of this application. The electronic device 1600 may be configured as the first device or the second device.

The electronic device 1600 includes a main control board 1610 and an interface board 1630.

The main control board 1610 is also referred to as a main processing unit (main processing unit, MPU) or a route processor card (route processor card). The main control board 1610 controls and manages components in the electronic device 1600, including route computation, device management, device maintenance, and protocol processing functions. The main control board 1610 includes a central processing unit 1611 and a memory 1612.

The interface board 1630 is also referred to as a line interface unit card (line processing unit, LPU), a line card (line card), or a service board. The interface board 1630 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1630 includes: a central processing unit 1631, a network processor 1632, a forwarding entry memory 1634, and a physical interface card (physical interface card, PIC) 1633.

The central processing unit 1631 on the interface board 1630 is configured to control and manage the interface board 1630 and communicate with the central processing unit 1611 on the main control board 1610.

The network processor 1632 is configured to implement packet forwarding processing. A form of the network processor 1632 may be a forwarding chip. Specifically, processing on an uplink packet includes processing at a packet ingress interface and forwarding table lookup, and processing on a downlink packet includes forwarding table lookup and the like.

The physical interface card 1633 is configured to implement an interconnection function at a physical layer. Original traffic enters the interface board 1630 from the physical interface card 1633, and a processed packet is sent from the physical interface card 1633. The physical interface card 1633 includes at least one physical interface, and the physical interface is also referred to as a physical port. The physical interface card 1633, also referred to as a subcard, may be mounted on the interface board 1630, and is responsible for converting an optical/electrical signal into a packet, performing validity check on the packet, and forwarding the packet to the network processor 1632 for processing. In some embodiments, the central processing unit 1631 of the interface board 1603 may also implement a function of the network processor 1632, for example, implement software forwarding based on a general-purpose CPU. Therefore, the network processor 1632 is not required in the physical interface card 1633.

Optionally, the electronic device 1600 includes a plurality of interface boards. For example, the electronic device 1600 further includes an interface board 1640. The interface board 1640 includes a central processing unit 1641, a network processor 1642, a forwarding entry memory 1644, and a physical interface card 1643.

Optionally, the electronic device 1600 further includes a switch fabric 1620. The switch fabric 1620 may also be referred to as a switch fabric unit (switch fabric unit, SFU). When the electronic device 1600 has a plurality of interface boards 1630, the switch fabric 1620 is configured to implement data exchange among the interface boards. For example, the interface board 1630 and the interface board 1640 may communicate with each other through the switch fabric 1620.

The main control board 1610 is coupled to the interface board 1630. For example, the main control board 1610, the interface board 1630, the interface board 1640, and the switch fabric 1620 are connected to a system backplane through a system bus to implement interworking. In a possible implementation, an inter-process communication (inter-process communication, IPC) protocol channel is established between the main control board 1610 and the interface board 1630, and the main control board 1610 and the interface board 1630 communicate with each other through the IPC channel.

Logically, the electronic device 1600 includes a control plane and a forwarding plane. The control plane includes the main control board 1610 and the central processing unit 1631. The forwarding plane includes components for performing forwarding, such as the forwarding entry memory 1634, the physical interface card 1633, and the network processor 1632. The control plane implements functions of a router, generating a forwarding table, processing signaling and protocol packets, and configuring and maintaining a status of a device. The control plane delivers a generated forwarding table to the forwarding plane. On the forwarding plane, the network processor 1632 performs table lookup and forwarding on a packet received by the physical interface card 1633 based on the forwarding table delivered by the control plane. The forwarding table delivered by the control plane may be stored in the forwarding entry memory 1634. In some embodiments, the control plane and the forwarding plane may be completely separated, and may be not on a same device.

If the electronic device 1600 is configured as the first device, the central processing unit 1611 obtains a training dataset based on a current collection policy, and performs a process of reduction of spatial features and/or reduction of temporal features based on the obtained training dataset. The network processor 1632 triggers the physical interface card 1633 to receive the training dataset.

It should be understood that the first obtaining module 1401 in the apparatus 1400 is equivalent to the physical interface card 1633 or the physical interface card 1643 in the electronic device 1600; and the second obtaining module 1402 and the determining module 1403 in the apparatus 1400 may be equivalent to the central processing unit 1611 or the central processing unit 1631 in the electronic device 1600.

If the electronic device 1600 is configured as the second device, the central processing unit 1611 performs feature collection based on a current collection policy, to obtain a training dataset. The network processor 1632 triggers the physical interface card 1633 to send the training dataset.

It should be understood that, in this embodiment of this application, operations on the interface board 1640 are the same as operations on the interface board 1630. For brevity, details are not described again. It should be understood that the electronic device 1600 in this embodiment may correspond to the first device or the second device in the foregoing method embodiments. The main control board 1610, the interface board 1630, and/or the interface board 1640 in the electronic device 1600 may implement the functions and/or the steps implemented by the first device or the second device in the foregoing method embodiments. For brevity, details are not described herein again.

It is to be noted that, there may be one or more main control boards. When there are a plurality of main control boards, the main control boards may include an active main control board and a standby main control board. There may be one or more interface boards, and the electronic device with a stronger data processing capability provides more interface boards. There may also be one or more physical interface cards on the interface board. There may be no switch fabric or one or more switch fabrics. When there are a plurality of switch fabrics, load balancing and redundancy backup may be implemented together. In a centralized forwarding architecture, the electronic device may not need the switch fabric, and the interface board provides a function of processing service data of an entire system. In a distributed forwarding architecture, the electronic device may have at least one switch fabric, and exchange data among a plurality of interface boards through the switch fabric, to provide a large-capacity data exchange and processing capability. Therefore, a data access and processing capability of an electronic device in the distributed architecture is better than that of a device in the centralized architecture. Optionally, in another form of the electronic device, there may be only one board card. In other words, there is no switch fabric, and functions of the interface board and the main control board are integrated on the board card. In this case, the central processing unit on the interface board and the central processing unit on the main control board may be combined into one central processing unit on the board card, to perform functions after the two central processing units are combined. A device in this form (for example, a network device such as a low-end switch or router) has a low data exchange and processing capability. A specific architecture that is to be used depends on a specific networking deployment scenario. This is not limited herein.

In an example embodiment, a computer-readable storage medium is further provided, for example, a memory including program code. When the program code is executed (for example, by a network device, a control device, or one or more processors), all or some steps of the method for determining a collection period in the foregoing embodiments are implemented. For example, the computer-readable storage medium is a non-transitory computer-readable storage medium, such as a read-only memory (read-only memory, ROM), a random access memory (random access memory, RAM), a read-only disc (compact disc read-only memory, CD-ROM), a magnetic tape, a floppy disk, or an optical data storage device.

An embodiment of this application further provides a computer program product or a computer program. The computer program product or the computer program includes program code. When the program code is executed (for example, by a network device, a control device, or one or more processors), all or some steps of the method for determining a collection period in the foregoing method embodiments are implemented.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method for determining a collection period in the foregoing method embodiments.

An embodiment of this application provides a chip. The chip includes a programmable logic circuit and/or program instructions. The chip runs to implement all or some steps of the method for determining a collection period provided in the foregoing method embodiments.

The apparatus, the electronic device, the computer-readable storage medium, the computer program product, and the chip provided in the embodiments are all configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for description. In actual application, the foregoing functions may be allocated to different functional modules for implementation as required. That is, an internal structure of the apparatus is divided into different functional modules to implement all or some of the functions described above. In addition, the foregoing embodiment and the embodiment of the method for determining a collection period provided above pertain to a same concept. For a specific implementation process, refer to the method embodiments. Details are not described herein again.

In the several embodiments provided in this application, it should be understood that the disclosed apparatus and method may be implemented in other manners. For example, the described apparatus embodiments are merely an example. For example, division into the modules or units is merely logical function division and may be other division in actual implementation. For example, a plurality of units or components may be combined or integrated into another apparatus, or some features may be omitted or not be performed. In addition, the displayed or discussed mutual couplings or direct couplings or communication connections may be implemented through some interfaces. The indirect couplings or communication connections of the apparatuses or units may be implemented in electrical, mechanical, or other forms.

The units described as separate parts may or may not be physically separate, and the parts displayed as the units may be one or more physical units, that is, may be located in one place, or may be distributed on different places. Some or all of the units may be selected based on actual requirements to achieve the objectives of the solutions in this application.

In addition, the functional units in embodiments of this application may be integrated into one processing unit, or each of the units may exist alone physically, or two or more units are integrated into one unit. The foregoing integrated unit may be implemented in a form of hardware, or may be implemented in a form of a software functional unit.

If the integrated unit is implemented in a form of a software functional unit and is sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for enabling a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In descriptions of this application, unless otherwise specified, "/" means "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

All of the foregoing technical solutions may form optional embodiments of this disclosure through any combination. Details are not described herein again.

The foregoing descriptions are merely optional embodiments of this application, but are not intended to limit this application. Any modification, equivalent replacement, or improvement made without departing from the spirit and principle of this application should fall within the protection scope of this application.

## Claims

1. A method for determining a collection period, wherein the method comprises:
obtaining a first training dataset D1, wherein the first training dataset D1 is for training a machine learning model, and the first training dataset D1 comprises sampled data of X features, that is, D1 = {d1₁, ..., d1ᵢ, ..., d1ₓ}, wherein d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X;
obtaining a first machine learning model based on the first training dataset D1; and
determining, if the first machine learning model satisfies a first condition, the candidate collection period p1ᵢ of the i^{th} feature as a target collection period of the i^{th} feature, wherein the target collection period of the i^{th} feature is greater than a minimum collection period of the i^{th} feature.

2. The method according to claim 1, wherein the method further comprises:
obtaining a second training dataset D2, wherein the second training dataset D2 is for training a machine learning model, and the second training dataset D2 comprises sampled data of the X features, that is, D2 = {d2₁, ..., d2ᵢ, ..., d2ₓ}, wherein d2ᵢ represents sampled data of the i^{th} feature, d2ᵢ is sampled data obtained by sampling the i^{th} feature based on a candidate collection period p2ᵢ, and p2; is a candidate collection period of the i^{th} feature;
obtaining a second machine learning model based on the second training dataset D2; and
determining, if the second machine learning model satisfies the first condition and the second training dataset D2 satisfies a second condition, the candidate collection period p2; of the i^{th} feature as the target collection period of the i^{th} feature.

3. The method according to claim 2, wherein that the second training dataset D2 satisfies the second condition comprises:
a data amount of the second training dataset D2 in a target time period is less than a data amount of the first training dataset D1 in the target time period.

4. The method according to claim 3, wherein duration of the target time period is greater than or equal to a maximum candidate collection period in a candidate collection period set P2, and the candidate collection period set P2 comprises candidate collection periods of the X features, that is, P2 = {p2₁, ..., p2ᵢ, ..., p2ₓ}.

5. The method according to any one of claims 1 to 4, wherein before the obtaining a first training dataset D1, the method further comprises:
determining the X features from Z features, wherein importance degrees of the X features all satisfy a third condition, an importance degree of each feature indicates a degree of impact of each feature on a machine learning model obtained through training, Z is an integer greater than 1, and X is an integer greater than 0 and less than or equal to Z.

6. The method according to any one of claims 1 to 4, wherein before the obtaining a first training dataset D1, the method further comprises:
obtaining first importance degrees of T features, wherein a first importance degree of each feature is an importance degree of each feature obtained based on sampled data of the T features, the importance degree of each feature indicates a degree of impact of each feature on a machine learning model obtained through training, and T is an integer greater than 2;
obtaining, if first importance degrees of Z features in the T features all satisfy a third condition and none of first importance degrees of Y features in the T features satisfies the third condition, second importance degrees of the Z features and second importance degrees of K features in the Y features, wherein a second importance degree of each feature is an importance degree of each feature obtained based on sampled data of the Z features and the K features, Z and Y are both integers less than T, and K is an integer greater than 0 and less than Y; and
determining the X features from the Z features and the K features, wherein second importance degrees of the X features all satisfy the third condition.

7. The method according to claim 5 or 6, wherein the third condition comprises:
an importance degree of a feature is greater than or equal to a threshold of a degree of impact.

8. The method according to any one of claims 1 to 7, wherein the first condition comprises:
model precision of a machine learning model is greater than or equal to a model precision threshold.

9. The method according to any one of claims 1 to 8, wherein the method is performed by an embedded device.

10. A system for determining a collection period, wherein the system comprises a data collection unit and an assessment unit;
the data collection unit is configured to obtain a first training dataset D1, wherein the first training dataset D1 is for training a machine learning model, and the first training dataset D1 comprises sampled data of X features, that is, D1 = {d1₁, ..., d1ᵢ, ..., d1ₓ}, wherein d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X; and
the assessment unit is configured to:
obtain a first machine learning model based on the first training dataset D1; and
determine, if the first machine learning model satisfies a first condition, the candidate collection period p1ᵢ of the i^{th} feature as a target collection period of the i^{th} feature, wherein the target collection period of the i^{th} feature is greater than a minimum collection period of the i^{th} feature.

11. The system according to claim 10, wherein
the data collection unit is further configured to obtain a second training dataset D2, wherein the second training dataset D2 is for training a machine learning model, and the second training dataset D2 comprises sampled data of the X features, that is, D2 = {d2i, ..., d2ᵢ, ..., d2ₓ}, wherein d2ᵢ represents sampled data of the i^{th} feature, d2ᵢ is sampled data obtained by sampling the i^{th} feature based on a candidate collection period p2ᵢ, and p2; is a candidate collection period of the i^{th} feature; and
the assessment unit is further configured to:
obtain a second machine learning model based on the second training dataset D2; and
determine, if the second machine learning model satisfies the first condition and the second training dataset D2 satisfies a second condition, the candidate collection period p2; of the i^{th} feature as the target collection period of the i^{th} feature.

12. The system according to claim 10 or 11, wherein the assessment unit is further configured to:
determine the X features from Z features, wherein importance degrees of the X features all satisfy a third condition, an importance degree of each feature indicates a degree of impact of each feature on a machine learning model obtained through training, Z is an integer greater than 1, and X is an integer greater than 0 and less than or equal to Z.

13. The system according to any one of claims 10 to 12, wherein the assessment unit is further configured to:
obtain first importance degrees of T features, wherein a first importance degree of each feature is an importance degree of each feature obtained based on sampled data of the T features, the importance degree of each feature indicates a degree of impact of each feature on a machine learning model obtained through training, and T is an integer greater than 2;
obtain, if first importance degrees of Z features in the T features all satisfy a third condition and none of first importance degrees of Y features in the T features satisfies the third condition, second importance degrees of the Z features and second importance degrees of K features in the Y features, wherein a second importance degree of each feature is an importance degree of each feature obtained based on sampled data of the Z features and the K features, Z and Y are both integers less than T, and T is an integer greater than 0 and less than Y; and
determine the X features from the Z features and the K features, wherein second importance degrees of the X features all satisfy the third condition.

14. An apparatus for determining a collection period, wherein the apparatus comprises:
a first obtaining module, configured to obtain a first training dataset D1, wherein the first training dataset D1 is for training a machine learning model, and the first training dataset D1 comprises sampled data of X features, that is, D1 = {dli, ..., d1ᵢ, ..., d1ₓ}, wherein d1ᵢ represents sampled data of an i^{th} feature, d1ᵢ is sampled data obtained by sampling the i^{th} feature based on a candidate collection period p1ᵢ, p1ᵢ is a candidate collection period of the i^{th} feature, X is an integer greater than 0, and i is an integer greater than 0 and less than or equal to X;
a second obtaining module, configured to obtain a first machine learning model based on the first training dataset D1; and
a determining module, configured to determine, if the first machine learning model satisfies a first condition, the candidate collection period p1ᵢ of the i^{th} feature as a target collection period of the i^{th} feature, wherein the target collection period of the i^{th} feature is greater than a minimum collection period of the i^{th} feature.

15. The apparatus according to claim 14, wherein
the first obtaining module is further configured to obtain a second training dataset D2, wherein the second training dataset D2 is for training a machine learning model, and the second training dataset D2 comprises sampled data of the X features, that is, D2 = {d2₁, ..., d2;, ..., d2ₓ}, wherein d2ᵢ represents sampled data of the i^{th} feature, d2ᵢ is sampled data obtained by sampling the i^{th} feature based on a candidate collection period p2ᵢ, and p2; is a candidate collection period of the i^{th} feature;
the second obtaining module is further configured to obtain a second machine learning model based on the second training dataset D2; and
the determining module is further configured to determine, if the second machine learning model satisfies the first condition and the second training dataset D2 satisfies a second condition, the candidate collection period p2; of the i^{th} feature as the target collection period of the i^{th} feature.

16. The apparatus according to claim 15, wherein that the second training dataset D2 satisfies the second condition comprises:
a data amount of the second training dataset D2 in a target time period is less than a data amount of the first training dataset D1 in the target time period.

17. The apparatus according to claim 16, wherein duration of the target time period is greater than or equal to a maximum candidate collection period in a candidate collection period set P2, and the candidate collection period set P2 comprises candidate collection periods of the X features, that is, P2 = {p2i, ..., p2ᵢ, ..., p2ₓ}.

18. The apparatus according to any one of claims 14 to 17, wherein the determining module is further configured to:
determine the X features from Z features, wherein importance degrees of the X features all satisfy a third condition, an importance degree of each feature indicates a degree of impact of each feature on a machine learning model obtained through training, Z is an integer greater than 1, and X is an integer greater than 0 and less than or equal to Z.

19. The apparatus according to any one of claims 14 to 17, wherein the apparatus further comprises:
a third obtaining module, configured to obtain first importance degrees of T features, wherein a first importance degree of each feature is an importance degree of each feature obtained based on sampled data of the T features, the importance degree of each feature indicates a degree of impact of each feature on a machine learning model obtained through training, and T is an integer greater than 2;
the third obtaining module is further configured to obtain, if first importance degrees of Z features in the T features all satisfy a third condition and none of first importance degrees of Y features in the T features satisfies the third condition, second importance degrees of the Z features and second importance degrees of K features in the Y features, wherein a second importance degree of each feature is an importance degree of each feature obtained based on sampled data of the Z features and the K features, Z and Y are both integers less than T, and K is an integer greater than 0 and less than Y; and
the determining module is further configured to determine the X features from the Z features and the K features, wherein second importance degrees of the X features all satisfy the third condition.

20. The apparatus according to claim 18 or 19, wherein the third condition comprises:
an importance degree of a feature is greater than or equal to a threshold of a degree of impact.

21. The apparatus according to any one of claims 14 to 20, wherein the first condition comprises:
model precision of a machine learning model is greater than or equal to a model precision threshold.

22. The apparatus according to any one of claims 14 to 21, wherein the apparatus is an embedded device.

23. An electronic device, wherein the electronic device comprises a processor, and the processor is configured to execute program code, so that the electronic device performs the method according to any one of claims 1 to 9.

24. A computer-readable storage medium, wherein the storage medium stores at least one piece of program code, and the at least one piece of program code is read by a processor, so that an electronic device performs the method according to any one of claims 1 to 9.
